# EUROPEAN PATENT APPLICATION

(11) **EP 0 892 399 A2**
(43) Date of publication of application: **20.01.1999**
(21) Application number: 98305589.8
(22) Date of filing: 14.07.1998
(51) Int. Cl.: G11B 7/24

(54) **Information recording medium and information recording/reproducing apparatus**

(30) Priority: 17.07.1997 JP 192366/97; 19.11.1997 JP 318237/97; 21.11.1997 JP 321117/97; 21.05.1998 JP 139741/98
(71) Applicant: CANON KABUSHIKI KAISHA, Tokyo (JP)
(72) Inventor: Inoue, Masato, Ohta-ku, Tokyo (JP); Ohta, Shinichi, Ohta-ku, Tokyo (JP); Ogawa, Yoshihiro, Ohta-ku, Tokyo (JP); Tamura, Tomoyuki, Ohta-ku, Tokyo (JP); Nagano, Kazumi, Ohta-ku, Tokyo (JP); Tanabe, Hiroshi, Ohta-ku, Tokyo (JP)
(74) Representative: Beresford, Keith Denis Lewis

(57) **Abstract**

A highly reliable hybrid card and a recording/reproducing apparatus to be used with such a hybrid card are provided. An information recording medium has a size of a credit card and comprises a transparent substrate (111), an optical recording layer (113), an IC chip (103) and an antenna coil (107) for an information exchanging operation of at least either recording information on the IC chip (103) or reproducing information stored in the IC chip (103) without bringing the IC chip (103) and the information recording/reproducing apparatus into direct mutual contact. The transparent substrate (111), the optical recording layer (113) and the antenna coil (107) are arranged in the above listed order.

## Description

### BACKGROUND OF THE INVENTION

### Field of the Invention

This invention relates to an information recording medium and also to an information recording/reproducing apparatus using the same. More particularly, the present invention relates to an information recording medium comprising information recording areas having different recording characteristics and adapted to record and reproduce information in different modes and also to an information recording/reproducing apparatus that uses such a medium for recording and reproducing information.

### Related Background Art

Of a variety of optical information recording media including optical files and compact discs that have been proposed in recent years, optical cards have been attracting attention because they are lightweight and portable and have a large storage capacity in spite of their relatively small size. Optical cards provide advantages of a large storage capacity, the ease of manufacturing and low cost. The reliability of the information stored in an optical card will be high if the optical card has a write once type optical recording region to make the information recorded there practically free from falsifications. In view of these and other advantages, there will be a large demand for optical cards.

The configuration of a typical optical card will be briefly described below by referring to the accompanying drawings.

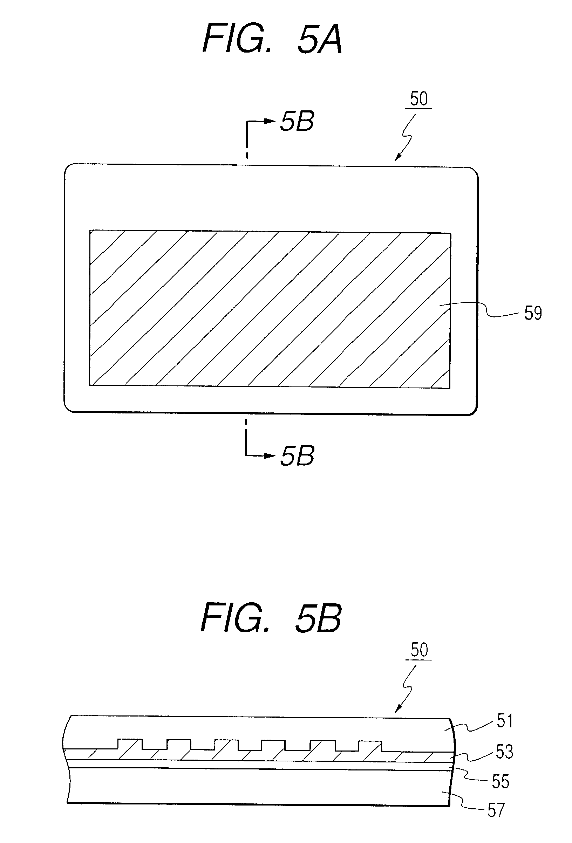

FIG. 5A is a schematic plan view of a typical known optical card 50 and FIG. 5B is a schematic cross sectional view of the card of FIG. 5A taken along line 5B-5B in FIG. 5A. Referring to FIGS. 5A and 5B, the optical card comprises a transparent substrate 51, an optical recording layer 53 operating as optical recording region 59, a bonding layer 55 and a protective layer 57. The optical recording layer 53 is made of a material that can change its form or color by optical energy such as silver film, tellurium oxide or a dye. The transparent substrate 51 and the protective layer 57 are typically made of acrylic resin, polycarbonate resin or vinylchloride resin.

The optical card 50 records information on the optical recording layer 53 and reproduces the information it stores in the optical recording layer 53 as it is irradiated with light. More specifically, the recorded information can be reproduced from the optical recording layer 53 by reciprocating one or more than one finely converged light spots on it and information can be recorded in it as optically detectable arrays of recording pits by modulating the light spots as a function of the information to be recorded. Techniques called auto-tracking (hereinafter referred to as AT) control and auto-focusing (hereinafter referred to as AF) are used to accurately record each piece of information on a predetermined region of the optical card layer 53. AT control is a technique for positionally controlling the light spots in a direction perpendicular relative to the scanning direction on the plane of the optical card, whereas AF control is a technique for positionally controlling the light spots in a direction perpendicular relative to the plane of the optical card. Preferably, these techniques are also used for controlling the light spots for the information reproducing operation.

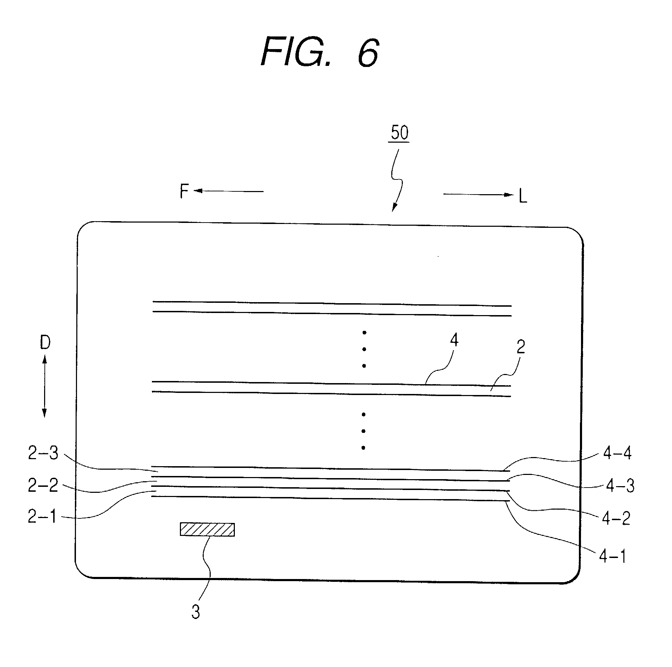

FIG. 6 of the accompanying drawings is a schematic plan view of an optical card 50, illustrating its format. A large number of information tracks 2 and tracking tracks 4 are arranged alternately on the recording plane of the optical card. Additionally, the optical card has a home position 3 that provides a reference for accessing the information tracks 2. The information tracks 2 are denoted by reference symbols 2-1, 2-2, 2-3, ... sequentially from the track closest to the reference point (home position 3).

As shown in FIG. 6, the tracking tracks 4-1, 4-2, 4-3, ... are arranged adjacent to the respective information tracks 2. The tracking tracks are used for the purpose of AT control of controlling and guiding the light spots so that they may not swerve from the information tracks in the scanning operation for recording or reproducing information.

More specifically, the AT control operation is conducted by means of a servo control circuit for detecting the deviation of any of the light spots from the information tracks (AT error) by means of an optical head and feeding back the information obtained by the detecting operation to the tracking actuator that drives the objective lens in the tracking direction. In other words, the light spots are controlled so as not to deviate from the information tracks being scanned by driving the objective lens in the tracking direction (D direction) relative to the optical head main body.

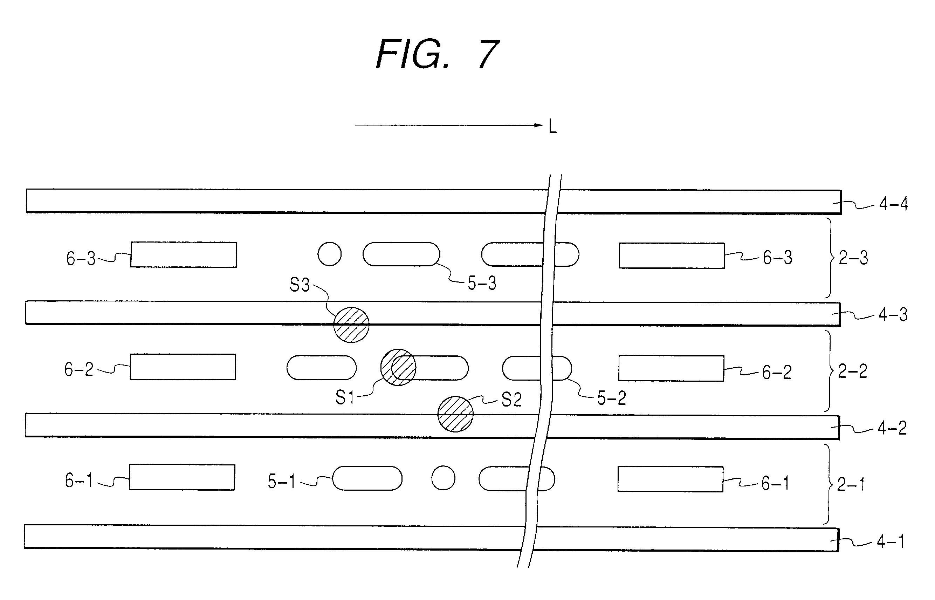

When, on the other hand, the light spots are made to scan the information tracks for reproducing information, they are controlled by AF control relative to the objective lens in order to make them occupy an appropriate area (focused) on the recording plane of the optical card. Thus, in the AF control operation, any deviation of the light spots from a focused state (AF error) is detected by the optical head and the detection signal is fed back to the focusing actuator for driving the objective lens along its optical axis so that the light spots are controlled to focus on the recording layer of the optical card as the objective lens is driven in the focusing direction relative to the optical head main body. Referring to FIG. 7, reference symbols S1, S2 and S3 denotes light spots formed on the optical card. The AT control operation is conducted by using light spots S2 and S3 that are partly irradiating the tracking tracks 4-2 and 4-3. The AF control operation and the operation of reading information pits are conducted by using light spot S1. In FIG. 7, reference symbols 5-1 through 5-3 denote information pit arrays and reference symbols 6-1 through 6-3 denote track numbers (addresses) of the tracks arranged at the opposite sides of the information pit arrays 5-1 through 5-3 respectively. The information tracks are provided with respective track numbers showing their addresses.

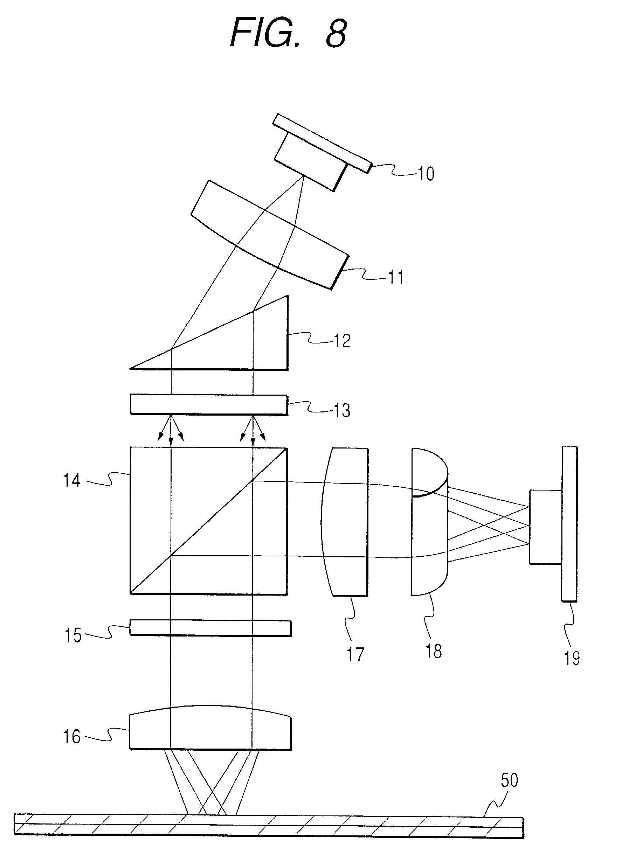

FIG. 8 is a schematic lateral view of the optical head section of an optical information reproducing apparatus for reproducing information from an optical card 50, showing its configuration. In FIG. 8, reference numeral 10 denotes a semiconductor laser operating as light source.

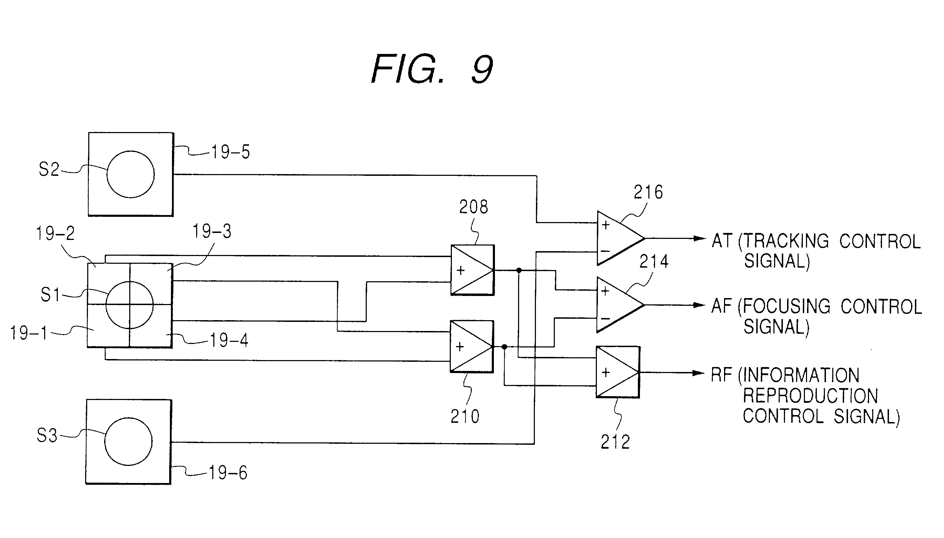

Referring to FIG. 8, the optical head section comprises a collimator lens 11, a beam-shaping prism 12, a diffraction grating 13 and a polarization beam splitter 14 as well as a quarter-wave plate 15, an objective lens 16, a spherical lens 17, a cylindrical lens 18 and a photodetector 19. As shown in FIG. 9, the photodetector 19 comprises a quadrupartite member having light-receiving elements 19-1, 19-2, 19-3 and 19-4 and a pair of light-receiving elements 19-5 and 19-6.

The light beam emitted from the semiconductor laser 10 is reduced to a divergent bundle of rays and enters the collimator lens 11 to become a beam of collimated rays, which is then transformed to show a substantially circular cross section by the beam-shaping prism 12 before it enters the diffraction grating 13. The diffraction grating 13 divides the beam into three effective light beams (a zero-order diffracted beam and a pair of ± first-order beams).

The obtained three fluxes of light then enters the polarization beam splitter 14 as P-polarized light and transformed into circularly polarized light as it passes through the polarization beam splitter 14 and the quarter-wave plate 15. The three fluxes of light transformed into circularly polarized light are then converged to fine light spots by the objective lens 16 and focused on the optical card 50. The focused beams of light correspond to the fine light spots S2 (the + first-order diffracted beam), S1 (the zero-order diffracted beam) and S3 (the - first-order diffracted beam). As described above, the light spot S1 is used for reproducing information and AF control, while the light spots S2 and S3 are used for AT control.

Of the light spots, the light spots S2 and S3 are located on respective tracking tracks that are adjacent relative to each other as shown in FIG. 7, whereas the light spot S1 is located on the information track 2 sided by the two tracking tracks and used for storing information.

As the light spots irradiate the optical card, they are partly reflected by the plane of the optical card and enters the objective lens 16. The rays of the reflected light are then collimated again as they pass through the objective lens 16 and transformed into beams of light that are polarized by 90 degrees relative to those incident on the optical card as they pass through the quarter-wave plate 15 before entering the polarization beam splitter 14 as S-polarized light and reflected to the side of a photodetective optical system of the photodetector to become separated from the fluxes of light from the semiconductor laser 10.

The photodetective optical system comprises a spherical lens 17, a cylindrical lens 18 and a photodetector 19, of which the spherical lens 17 and the cylindrical lens 18 are combinedly used for AF control operations employing an astigmatic method. The three fluxes of light reflected by the optical card 50 are detected by the photodetector 19 comprising a plurality of light-receiving elements.

FIG. 9 is a schematic circuit diagram of the signal processing circuit of the optical information reproducing apparatus. In FIG. 9, reference numeral 19 denotes the photodetector of FIG. 8 that comprises a quadrupartite member having light-receiving elements 19-1, 19-2, 19-3 and 19-4 and a pair of light-receiving elements 19-5 and 19-6 as described earlier. The light spots S1, S2 and S3 on the surfaces of the light-receiving elements represent the beams of light reflected by the optical card respectively. The light spots S2 and S3 for AT control are received by the light-receiving elements 19-5 and 19-6 respectively, while the light spot for AF control and information reproduction is received by the light-receiving elements 19-1 through 19-4 of the quadrupartite member.

The output signals from the light-receiving elements 19-5 and 19-6 are sent to a subtraction circuit 216, which generates an AT control signal by detecting the difference therebetween. The output signals of the light-receiving elements 19-2 and 19-4 of the quadrupartite member are added by an addition circuit 208, whereas the output signals of the light-receiving elements 19-1 and 19-3 are added by another addition circuit 210. The output signals of the addition circuits 208 and 210 are sent to another subtraction circuit 214, which generates an AF control signal by detecting the difference therebetween. The output signals of the addition circuits 208 and 210 are further added by another addition circuit 212 to produce a summation signal for the light-receiving elements of the quadrupartite member, which signal is then output as information reproduction signal RF.

Hybrid type information recording media (hybrid cards) realized by incorporating a CPU and/or a semiconductor memory into the optical card to provide the latter with various additional functional features such as the feature of carrying out arithmetic operations are disclosed in a number of documents including Japanese Patent Applications Laid-Open Nos. 61-103287 and 62-194591.

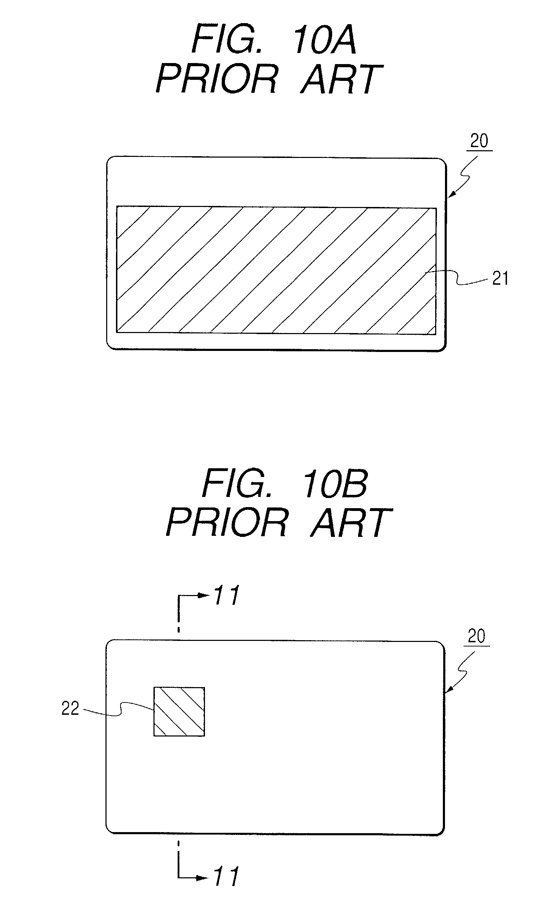

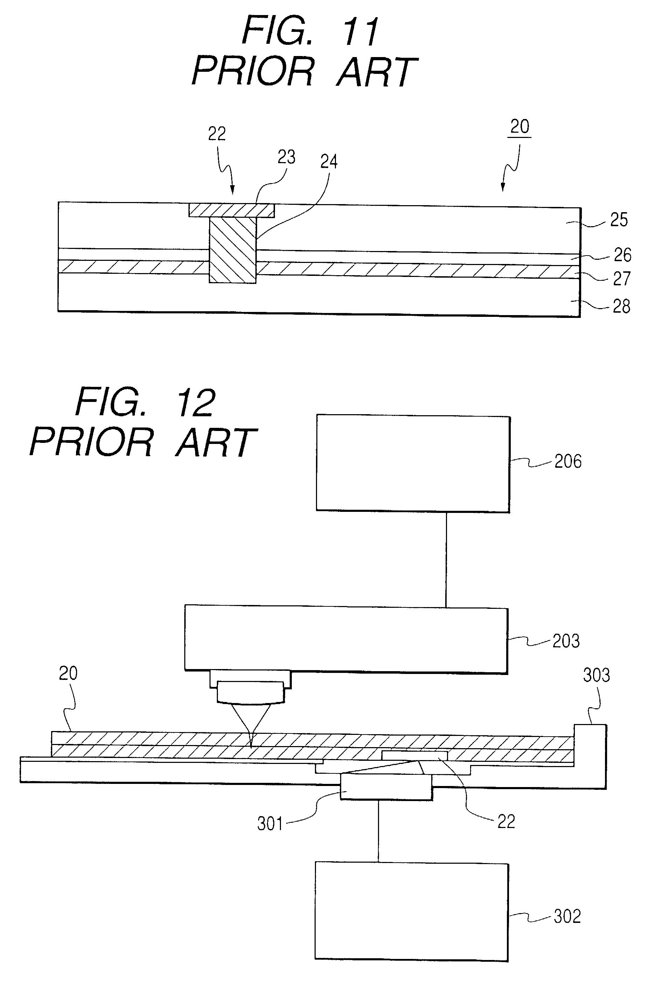

FIG. 10A is a schematic plan view of a known hybrid card 20 showing a side thereof and FIG. 10B is a schematic plan view of the card showing the opposite side thereof. FIG. 11 is a schematic cross sectional view of the card of FIGS. 10A and 10B taken along line 11-11 in FIG. 10B. Referring to FIGS. 10A, 10B and 11, the card has an optical recording region 21 and an IC module 22 that comprises electric elements including an IC chip and wiring circuits as integral parts thereof and is buried in the substrate 25 of the card. The card additionally carries on the surface an electrode section 23 including electrodes for connecting an the external power source to the IC module 22 and electrodes to be used for recording/reproducing information. The IC module 22 can be buried into the card substrate 25 by hollowing out the card substrate 25 to produce a recess adapted to receive the IC module 22 and bonding the latter to the bottom of the recess. In FIG. 11, the card otherwise comprises an optical recording layer 27 belonging to the optical recording region 21, a transparent substrate 28, a bonding layer 26, an IC substrate 25, an electrode section 23 including electrode for connecting the IC module 22 and an IC chip (CPU) 24 belonging to the IC module 22.

Thus, a hybrid card comprises an IC module 22 and an optical recording layer 27 in a single card-shaped medium as shown in FIGS. 10A, 10B and 11, where the IC module 22 can be accessed by means of a recording/reproducing unit adapted for a conventional IC card, while the optical recording region 21 can be accessed by means of an optical card recording/reproducing apparatus of the above described type.

Japanese Patent Application Laid-Open No. 7-234925 discloses an apparatus adapted for accessing both the IC module and the optical recording region of a hybrid type card-shaped recording medium and recording information on or reproducing information from the recording medium. FIG. 12 is a schematic block diagram of an apparatus for recording information on or reproducing information from a recording medium as disclosed in the above patent document. Referring to FIG. 12, there are shown a hybrid card 20, an IC module 22, an optical head section 203, an optical recording/reproducing control section 206, an IC contact 301, a recording/reproducing unit 302 adapted for an IC module and a card receiving table 303. It will be appreciated that the apparatus is realized by arranging an IC module contact 301 on part of the card receiving table of an optical card recording/reproducing apparatus of the above described type. Thus, information is recorded in or reproduced from the IC module 22 as the electrodes 23 of the IC module 22 of the hybrid card contact the IC module contact 301 on the card receiving table. Additionally, information is recorded in or reproduced from the optical recording region 21 by means of a hybrid recording/reproducing apparatus operating as an optical card recording/reproducing apparatus of the above described type if the electrodes of the IC module are arranged on the side opposite to the side where a laser beam is applied to record information on or reproduce information from the optical recording region 21.

However, the above cited hybrid card and hybrid recording/reproducing apparatus are accompanied by the following problems.
1. The above described known hybrid card comprises an optical recording region and an IC module having an exposed terminal. As a matter of course, the corresponding hybrid recording/reproducing apparatus is provided with an electric contact for contacting the exposed terminal. When the hybrid card is inserted into the hybrid recording/reproducing apparatus and set in position, it is moved on the card receiving table, depressing and scraping the IC contact of the card receiving table. Since the contact and the electrodes of the exposed terminal are made of electroconductive metal, they are worn away to become less durable as they are used. Additionally, since the contact normally comprises fine metal wires, they are also worn away with time to give rise to a problem of insufficient contact as the pressure they apply to the corresponding electrodes decreases to damage their reliability.
2. The contact type IC module normally comprises an IC chip and electrodes arranged one on the other in the card and has a height of about 0.6mm. The electrodes occupy an area of about 10mm square on the surface of the card. The optical card has a height of about 0.76±0.8mm as specified by the official standards, of which the transparent substrate 28 takes about 0.4mm, the optical recording region 27 and the bonding layer 26 collectively take about 0.06mm and the protective layer 25 takes about 0.3mm as will be appreciated by referring to FIG. 11. The IC module is received in a recess formed in the transparent substrate 28 and/or the backing member 25 and having a depth of at least about 0.6mm. Additionally, since the substrate of the optical card is typically made of a flexible material such as acryl or polycarbonate as described earlier, it can easily become bent or warped as the card is used. Thus, in the card where an IC module that is made of metal and hence less deformable is buried in an easily deformable substrate, the substrate and the IC module can be separated from each other along the bonding layer and eventually the IC module can come off from the substrate if the latter is bent or warped significantly.
3. Additionally, since the IC module has a height greater than that of the backing member, the recess form in the backing member for receiving it inevitably gets to the bonding layer and, more often than not, to the optical recording region to damage the function of the latter.
4. With the above described hybrid recording/reproducing apparatus to be used for a hybrid card comprising an IC module provided with an external terminal and an optical recording region, the latter is inserted into the former with the side of the IC module directed to the electric contact terminal of the card holder in the hybrid recording/reproducing apparatus. However, if the card is inserted into the apparatus erroneously with the side of the optical recording region directed to the contact terminal, the surface of the transparent substrate of the optical recording layer is scraped by the contact terminal that is made of metal so that the former can become damaged to show scars. Since information is recorded in and reproduced from the optical recording region by irradiating it with light, any scars on the surface of the transparent substrate can scatter or obstruct the light trying to irradiate it so that information may not be recorded nor reproduced reliably.

### SUMMARY OF THE INVENTION

In view of the above identified problems of known hybrid type information recording media and information recording/reproducing apparatus, it is therefore an object of the invention to provide a novel and highly reliable hybrid type information recording medium.

Another object of the invention is to provide an information recording/reproducing apparatus that can at least record information on or reproduce information from a hybrid type information recording medium with an enhanced level of reliability.

Still another object of the present invention is to provide an information recording apparatus that can maximally exploit the potential of a hybrid type information recording medium.

Still another object of the present invention is to provide an information recording/reproducing apparatus that can maximally exploit the potential of a hybrid type information recording medium.

According to a first aspect of the invention, the above objects may be achieved by providing an information recording medium comprising a transparent substrate, an optical recording layer, an IC chip and an antenna coil for an information exchanging operation of at least either recording information on the IC chip or reproducing information stored in the IC chip without bringing the IC chip and the information recording/reproducing apparatus into direct mutual contact wherein the transparent substrate, the optical recording layer and the antenna coil are arranged in the above listed order.

According to a second aspect of the invention, there is provided an information recording/reproducing apparatus to be used with an information recording medium comprising a transparent substrate, an optical recording layer, an IC chip and a first antenna coil for an information exchanging operation of at least either recording information on the IC chip or reproducing information stored in the IC chip without bringing the IC chip and the information recording/reproducing apparatus into direct mutual contact, the transparent substrate, the optical recording layer and the first antenna coil being arranged in the above listed order, wherein the apparatus comprises an optical head for recording information on and reproducing information from the optical recording layer, an information recording medium receiving table for receiving the information recording medium and a second antenna coil for at least either recording information on the IC chip or reproducing information stored in the IC chip without bringing the IC chip and the information recording/reproducing apparatus into direct mutual contact, and wherein the second antenna coil is arranged on the information recording medium receiving table.

The above arrangement of information recording medium according to the invention may be made free from the problems of known hybrid type information recording media as identified above. For example, the IC chip can be accessed without contacting it so that no electric contact has to be provided on the surface of the medium. As a result, a very flat IC module can be realized with a height substantially equal to that of an ordinary credit card for a lightweight and portable information recording medium comprising two memory sections of an IC recording section and an optical recording region. Additionally, since the surface of the transparent substrate for optical recording is free from scars if the hybrid card is inserted upside down into a hybrid information recording/reproducing apparatus so that the optical recording region of the card can reliably and accurately operate for recording/reproducing information to enjoy a long service life. Thus, the present invention can be used to configure an effective and reliable information recording/reproducing system by combining a hybrid type information recording medium and an information recording/reproducing apparatus according to the invention in order to provide a wide variety of applications. More specifically, such a system can exploit both the large memory capacity of the optical recording layer and the high security potential of the IC chip of a hybrid card. Additionally, both the optical recording region and the IC chip of the hybrid card can be accessed simultaneously to complementarily utilize the two recording sections in order to realize high speed information recording/reproducing operations. Thus, such a system is highly secure, reliable and portable and hence can provide a wide variety of effective applications.

In still another aspect, the present invention provides an information recording medium comprising a transparent substrate, an optical recording layer and an IC module, the IC module being provided with an IC chip and an antenna coil for an information exchanging operation of at least either recording information on the IC chip or reproducing information stored in the IC chip without bringing the IC chip and the information recording/reproducing apparatus into direct mutual contact, wherein the optical recording layer and the antenna coil are arranged on different respective planes and the antenna coil is arranged in a region not overlapping the region occupied by the optical recording layer.

In still another aspect, the present invention provides an information recording medium comprising a non-contact type IC module and an optical recording layer as information storage means, the IC module being provided with an IC chip and an internal antenna coil for an information exchanging operation of at least either recording information on the IC chip or reproducing information stored in the IC chip without bringing the IC chip and the information recording/reproducing apparatus into direct mutual contact, wherein the optical recording layer and the internal antenna coil are arranged on different respective planes in such a way that, when the information recording medium is set in position in an information recording/reproducing apparatus having an external antenna coil as means for recording information on and reproducing information from the IC module and an optical head arranged respectively on the opposite sides of the information recording medium, the external antenna coil and the optical head are not located oppositely with the information recording medium interposed therebetween.

With such an arrangement that the optical head and the antenna coil of the information recording/reproducing apparatus are not located oppositely with the information recording medium interposed therebetween, the disturbance of the external magnetic field to which the operation of the optical head is subjected can be minimized. Additionally, the adverse effect of the magnetic field generated by the actuator for driving the optical head for AT control and AF control that can be exerted on the information recording operation within the IC chip can also be minimized.

In still another aspect, the present invention provides an information recording medium comprising a transparent substrate, an optical recording layer, and an IC module having an IC chip and an antenna coil for an information exchanging operation of at least either recording information on the IC chip or reproducing information stored in the IC chip without bringing the IC chip and the information recording/reproducing apparatus into direct mutual contact, wherein the transparent substrate, the optical recording layer and the IC module are arranged in the above listed order, and an electromagnetic wave barrier layer is arranged on the side of the transparent substrate away from the antenna coil.

In still another aspect, the present invention provides an information recording medium comprising a transparent substrate, an optical recording layer, an IC module having an IC chip and an antenna coil for an information exchanging operation of at least either recording information on the IC chip or reproducing information stored in the IC chip without bringing the IC chip and the information recording/reproducing apparatus into direct mutual contact, wherein the transparent substrate, the optical recording layer and the IC module are arranged in the above listed order, an electromagnetic wave barrier layer is arranged on the side of the transparent substrate away from the antenna coil, and an electroconductive terminal is arranged at a position to be brought into contact with an information recording/reproducing apparatus for recording/reproducing information and electrically connected to the electromagnetic wave barrier layer.

In still another aspect, the present invention provides an information recording/reproducing apparatus to be used with an information recording medium comprising a transparent substrate, an optical recording layer, an IC module having an IC chip and an antenna coil for an information exchanging operation of at least either recording information on the IC chip or reproducing information stored in the IC chip without bringing the IC chip and the information recording/reproducing apparatus into direct mutual contact, the transparent substrate, the optical recording layer and the IC module being arranged in the above listed order, and an electromagnetic wave barrier layer arranged on the side of the transparent substrate away from the antenna coil, wherein the apparatus comprises an optical head for recording information on and reproducing information from the optical recording layer, an information recording medium receiving table for receiving the information recording medium and a coil for at least either recording information on the IC chip or reproducing information stored in the IC chip, the coil and the optical head being arranged in such a way that, when the information recording medium is set in position on the information recording medium receiving table, they are located oppositely with the information recording medium interposed therebetween, and wherein the information recording medium receiving table is so configured that, when the information recording medium is set in position on the information recording medium receiving table, it is electrically connected to the electromagnetic wave barrier layer for grounding.

In still another aspect, the present invention provides an information recording/reproducing apparatus to be used with an information recording medium comprising a transparent substrate, an optical recording layer, an IC module having an IC chip and an antenna coil for an information exchanging operation of at least either recording information on the IC chip or reproducing information stored in the IC chip without bringing the IC chip and the information recording/reproducing apparatus into direct mutual contact, the transparent substrate, the optical recording layer and the IC module being arranged in the above listed order, an electromagnetic wave barrier layer arranged on the side of the transparent substrate away from the antenna coil and an electroconductive terminal arranged at a position to be brought into contact with an information recording/reproducing apparatus for recording/reproducing information and electrically connected to the electromagnetic wave barrier layer, wherein the apparatus comprises an optical head for recording information on and reproducing information from the optical recording layer, an information recording medium receiving table for receiving the information recording medium and a coil for at least either recording information on the IC chip or reproducing information stored in the IC chip, wherein the coil and the optical head are arranged in such a way that, when the information recording medium is set in position on the information recording medium receiving table, they are located oppositely with the information recording medium interposed therebetween, and wherein the information recording medium receiving table is so configured that, when the information recording medium is set in position on the information recording medium receiving table, it is electrically connected to the electroconductive terminal to ground the electromagnetic wave barrier layer.

With the above arrangement of pinching the electromagnetic wave barrier layer within the information recording medium, the disturbance of the external magnetic field to which the operation of the optical head is subjected can be minimized if the optical head and the coil of the information recording/reproducing apparatus are located oppositely with the information recording medium interposed therebetween. Additionally, the adverse effect of the magnetic field generated by the actuator for driving the optical head for AT control and AF control that can be exerted on the information recording operation within the IC chip can also be minimized.

A number of embodiments of the invention will now be described, by way of example only, with reference to the accompanying drawings in which:

FIG. 1A is a schematic plan view of a hybrid card according to an embodiment of the invention, showing a side thereof.

FIG. 1B is a schematic plan view of the hybrid card of FIG. 1A, showing the other side thereof.

FIG. 2 is a schematic cross sectional view of the hybrid card of FIG. 1A taken along line 2-2 in FIG. 1A.

FIG. 3 is a schematic view of a non-contact IC, illustrating the principle and the configuration thereof for recording/reproducing information.

FIG. 4 is a schematic block diagram of an information recording/reproducing apparatus according to an embodiment of the invention and adapted to be used with a hybrid card.

FIG. 5A is a schematic plan view of a typical optical card.

FIG. 5B is a schematic cross sectional view of the optical card of FIG. 5A taken along line 5B-5B in FIG. 5A.

FIG. 6 is a schematic plan view of an optical card, illustrating the typical format of its optical recording region.

FIG. 7 is an enlarged schematic partial view of an optical card, showing light spots irradiating the card.

FIG. 8 is a schematic lateral view of the optical head section of an optical card recording/reproducing apparatus.

FIG. 9 is a schematic circuit diagram of the signal processing circuit of an information recording/reproducing apparatus.

FIG. 10A is a schematic plan view of a known contact type hybrid card, showing a side thereof.

FIG. 10B is a schematic plan view of the known contact type hybrid card of FIG. 10A, showing the other side thereof.

FIG. 11 is a schematic cross sectional view of the hybrid card of FIGS. 10A and 10B taken along line 11-11 in FIG. 10B.

FIG. 12 is a schematic block diagram of a known hybrid recording/reproducing apparatus.

FIG. 13 is a schematic plan view of an embodiment of information recording medium according to the invention.

FIG. 14 is a schematic cross sectional view of the embodiment of FIG. 13 taken along line 14-14 in FIG. 13.

FIG. 15 is a schematic cross sectional view of the embodiment of FIG. 13 taken along line 15-15 in FIG. 13.

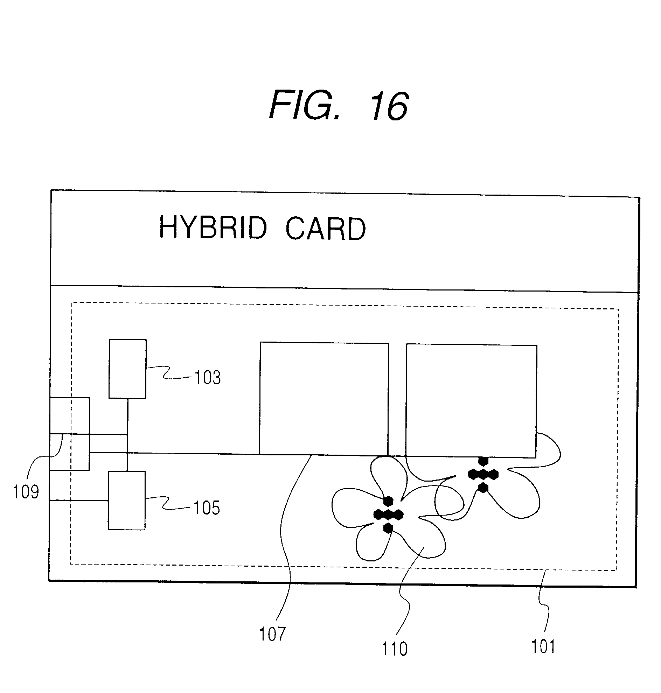

FIG. 16 is a schematic plan view of an information recording medium having the optical recording region overlapped by the coil for driving the IC chip.

FIGS. 17A, 17B and 17C are schematic lateral cross sectional views of the hybrid card of Example 1, showing different manufacturing steps.

FIG. 18 is a schematic plan view of an embodiment of information recording medium according to the invention, showing the side for receiving the beam of light for optical recording.

FIG. 19 is a schematic cross sectional view of the embodiment of FIG. 18 taken along line 19-19 in FIG. 18.

FIG. 20 is a schematic cross sectional view of the embodiment of FIG. 18 taken along line 20-20 in FIG. 18.

FIGS. 21A, 21B, 21C and 21D are schematic lateral cross sectional views of the embodiment of FIG. 18, showing different steps of manufacturing the IC module.

FIG. 22 is a schematic lateral cross sectional view of another embodiment of an information recording medium according to the invention.

FIG. 23 is a schematic perspective view of an embodiment of information recording/reproducing apparatus according to the invention.

FIG. 24 is a schematic lateral cross sectional view of still another embodiment of an information recording medium according to the invention.

FIG. 25 is a schematic plan view of still another embodiment of information recording medium according to the invention.

FIG. 26 is a schematic cross sectional view of the embodiment of FIG. 25 taken along line 26-26 in FIG. 25.

FIG. 27 is a schematic cross sectional view of the embodiment of FIG. 25 taken along line 27-27 in FIG. 25.

FIG. 28 is a schematic perspective view of an information recording/reproducing apparatus to be used for the information recording medium of FIG. 25.

FIG. 29 is a schematic lateral cross sectional view of a hybrid card obtained by cutting a sized work and having burrs at the ends.

FIG. 30 is a schematic lateral cross sectional view of a hybrid card obtained by cutting a sized work and having a trapezoidal cross section.

### DESCRIPTION OF THE PREFERRED EMBODIMENTS

Now, the present invention will be described in terms of specific embodiments.

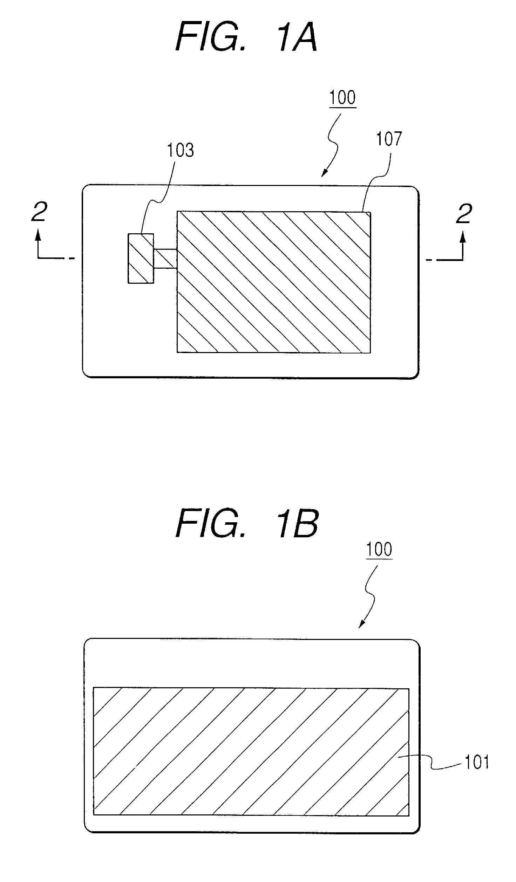

FIGS. 1A and 1B schematically show an embodiment of hybrid card 100. FIG. 1A is a schematic plan view of the side of non-contact IC section of the hybrid card (to be referred to as the front side hereinafter).

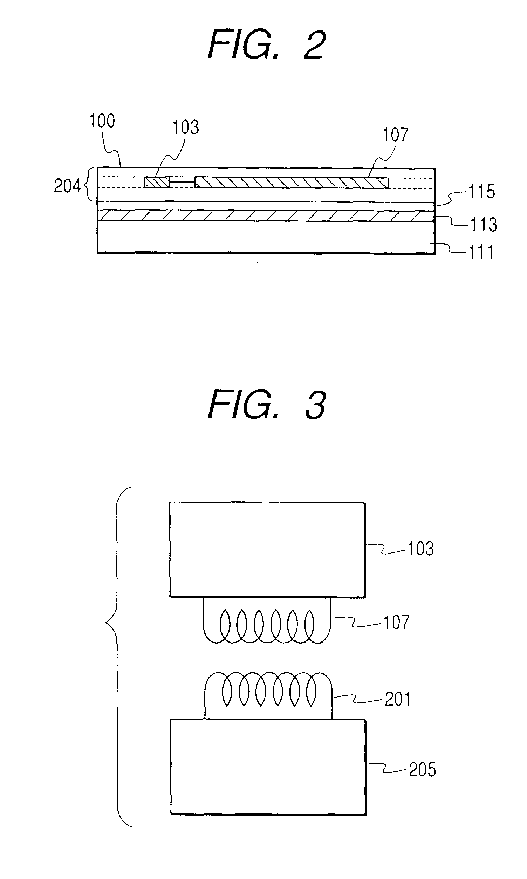

FIG. 1B is a schematic plan view of the side of the optical recording region (to be referred to as the rear side hereinafter) of the card. Referring to FIG. 1A, the hybrid card 100 comprises an IC chip 103 including an CPU and an antenna coil 107, the IC chip 103 and the antenna coil 107 being electrically connected. The IC chip 103 and the antenna coil 107 are mounted in a laminate of the card to form a layer thereof. Referring to FIG. 1B, the hybrid card 100 also comprises an optical recording region 101. FIG. 2 shows the hybrid card in cross section taken along line 2-2 in FIG. 1A and enlarged disproportionally along its height. Referring to FIG. 2, the hybrid card 100 further comprises a transparent substrate 111, an optical recording layer 113 providing said optical recording region 101, a bonding layer 115 and an IC substrate 204 which is in fact a laminate containing a layer of the IC chip 103 and the antenna coil 107 (and corresponds to the substrate 25, or the backing member, of the above described known substrate card). As clearly seen from FIG. 2, the transparent substrate 111, the optical recording layer 113 and the antenna coil 107 are arranged in the listed order in the hybrid card 100.

The transparent substrate 111, the optical recording layer 113 and the IC substrate 204 may be made of respective materials same as their counterparts of the above described known hybrid card. The antenna coil is normally helical of shape, although it is not limited thereto. The antenna coil is preferably made of an electroconductive material and can be prepared by sputtering evaporation or etching to make it very thin. Additionally, the antenna coil can be prepared by printing using vinylchloride if it is realized in the form of a thin film. Thus, the IC chip 103 and the antenna coil 107 can be arranged on a same plane to realize an IC substrate 204 having a height substantially same as the backing member 25 of the above described known hybrid card.

Now, the principle of the operation of recording information on the IC chip 103 and reproducing the information stored in the chip 103 of a hybrid card 100 will be described by referring to FIG. 3. Referring to FIG. 3, there are shown an IC chip 103 including a CPU having a memory power supply circuit, a first antenna coil 107 arranged on a hybrid card and a second antenna coil 201 arranged on an information recording/reproducing apparatus 205. For recording information, a radio frequency current of several hundreds kHz is applied to the recording/reproducing antenna coil 201 to give rise to a change in the magnetic field around the recording/reproducing antenna according to a recording instruction from the recording/reproducing apparatus 205. Then, a signal identical with the signal applied to the recording/reproducing antenna coil 201 is induced in the antenna coil 107 of the hybrid card by electromagnetic induction and the write instruction and the write information are identified by the control section of the IC chip 103 having a memory power supply circuit so that the information is stored in the memory. For reproducing information, a reproducing instruction is transmitted from the recording/reproducing apparatus 205 to the antenna coil 107 by way of the recording/reproducing antenna coil 201 so that the information stored in the specified data memory area is read out. The read out information is then modulated by an oscillator of the IC chip 103 and transmitted to the antenna coil 201 of the recording/reproducing apparatus from the antenna coil 107 by electromagnetic induction before it is demodulated by a recording/reproducing unit (not shown) adapted for an IC section to provide the original information. Thus, information is recorded in the IC chip and reproduced therefrom by means of electromagnetic induction.

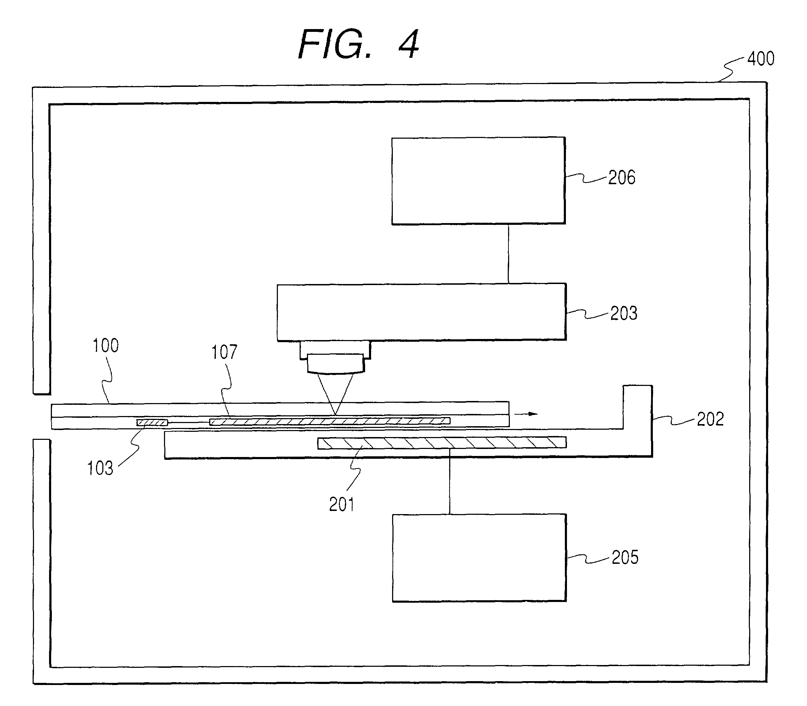

Now, a recording/reproducing apparatus to be used for a hybrid card according to an embodiment of the invention will be described by referring to FIG. 4. In FIG. 4, there are shown a card receiving table (hereinafter referred to as card holder) 202, a second antenna coil 201 arranged within the card holder, a recording/reproducing unit 205 adapted for an IC memory section and also arranged within the hybrid recording/reproducing apparatus 400, a hybrid card 100, an IC chip 103, a first antenna coil 107, an optical head 203 and an optical recording/reproduction control section 206. The optical head and the card holder can reciprocate relative to each other. The hybrid card 100 is put on the card holder 202 and the antenna coil 107 in the hybrid card is placed vis-a-vis the antenna coil 201 of the card holder. Thus, the hybrid card 100 is put into the information recording/reproducing apparatus in such a way that its antenna coil 107 faces the card holder 202 while its optical recording layer (not shown) faces the optical head 203 as shown in FIG. 4. Then, the hybrid card 100 is pushed in the direction indicated by the arrow in FIG. 4 until its front end abuts the card holder 202 for positional alignment. The antenna coil 107 in the card and the antenna coil 201 in the card holder 202 are tightly held together under this condition so that the IC chip 103 can record or reproduce information according to the recording or reproducing instruction from the recording/reproducing unit 205 adapted for an IC chip. Similarly, the optical recording region can record information or reproduce the information it stores according to the instruction from the optical recording/reproduction control section 206 and by way of the optical head 203 under this condition. One of the characteristic features of the recording/reproducing apparatus 400 to be used with a hybrid card according to an embodiment of the invention is that it comprises an information recording/reproducing unit adapted for the optical recording region and one adapted for the IC chip of a hybrid card as independent units so that they can access the optical recording region and the IC chip respectively and simultaneously. Another one of the characteristic features is that, as a result that the antenna coil 201 is built in the card holder 202, information can be recorded in or reproduced from the IC chip while the card holder 202 is reciprocating to record information on or reproduce information from the optical recording region. Thus, the operation of recording information on or reproducing information from the optical recording region can be conducted concurrently with the operation of recording information on or reproducing information from the IC chip. In other words, the information stored in the optical recording region can be transferred to the IC chip or vice versa and a specific data region of either the optical recording region or the IC chip can be automatically accessed according to the information stored in the other one. In short, the information stored in the optical recording region can be controlled by means of the information stored in the IC chip and vice versa to fully exploit the potential of a hybrid information recording medium.

The recording/reproducing units can be commonly controlled by means of a CPU (not shown). If such is the case, the information stored in the optical recording region can also be transferred to the IC chip or vice versa and a specific data region of either the optical recording region or the IC chip can be automatically accessed according to the information stored in the other one. Thus, the information stored in the optical recording region can be controlled by means of the information stored in the IC chip and vice versa to fully exploit the potential of a hybrid information recording medium regardless if the recording/reproducing units are commonly controlled by a single CPU or controlled separately by respective CPUs.

Various configurations are proposed for a non-contact type IC card, including the one where an IC module containing an IC chip, a capacitor, wires and a coil is sandwiched by upper and lower substrates, using an adhesive agent and the one where an IC, a capacitor and a printed coil are mounted on a card-like substrate to produce a 0.2mm thick IC card as described in "Hitachi Review", Vol. 79, 37-40, May 1997.

The non-contact type IC memory uses an electromagnetic wave as medium for transmitting information to and from the IC memory and the corresponding recording/reproducing unit. More specifically, the IC module and the corresponding recording/reproducing unit are provided with respective coils that are disposed vis-a-vis so that information may be transmitted from one of the coils to the other and vice versa by way of an induced electromagnetic field.

Non-contact type IC memories are normally classified into three categories of the adjacent type, the proximate type and the remote type. As international standards, ISO/IEC7816 is provided for contact type IC cards, whereas ISO/IEC 10536 and ISO/IEC14443 are provided for adjacent type IC cards and proximate type IC cards respectively. International standards are being worked out for IC cards of any other types. The classification of non-contact type IC memories is based on the intensity of the induced electromagnetic field to be used for the transmission of information. The IC module can be separated from the corresponding recording/reproducing unit by a large distance if the electromagnetic field is strong, whereas it has to be disposed close or adjacent to the recording/reproducing unit if the electromagnetic field is weak. The choice of the type of non-contact IC memory depends on the application of the IC memory. For example, if the IC memory is used in a commuter's ticket, the remote type or the proximate type that does not require the IC memory to be brought into contact with the corresponding recording/reproducing apparatus will be selected. If, on the other hand, the IC memory is used as electronic money storing the account data of the holder, the adjacent type may be a good choice for security reasons.

In view of the current status where at least three different types of non-contact IC memory are available, the non-contact IC memory to be used in a hybrid information recording medium can be of any of those types. As a result of intensive research efforts on feasible configurations of hybrid information recording medium and those of recording/reproducing apparatus that can be used with a recording medium of the type under consideration, the inventors of the present invention came to find that an information recording medium comprising a transparent substrate having an optical recording layer and a thin IC module containing a non-contact type IC memory and an internal coil and arranging the optical recording layer and the internal coil on different respective planes is highly effective for applications of hybrid information recording medium where the operation of recording information on or reproducing information from an IC memory and that of recording information on or reproducing information from an optical recording layer are conducted concurrently in an coordinated manner to fully exploit the potential of the hybrid information recording medium if it is used with an information recording/reproducing apparatus comprising an optical head to be used for the optical recording layer and an external coil to be used for the IC module arranged oppositely relative to the information recording medium.

When the optical recording layer and the internal coil are arranged on different respective planes in an information recording medium, the optical head and the external coil of the corresponding information recording/reproducing apparatus will probably be disposed oppositely relative to the information recording medium so that the magnetic field generated by the external coil can affect the operation of the optical head. Thus, the inventors of the present invention drew the conclusion that the possible mutual interference of the external coil and the optical head should be eliminated as extensively as possible in order to fully exploit the potential of the hybrid information recording medium. No reports have been known on the influence of the magnetic field that is generated as a result of driving an IC memory and exerted on the optical head for optically recording and reproducing information and the inventors of the present invention believe that the above identified problem should be resolved before realizing a highly reliable hybrid information recording medium. Thus, the inventors of the present invention came to find that the above technological problem can be solved by providing an information recording medium according to (1) or (2) below.
(1) an information recording medium where the optical recording layer and the internal coil are arranged so as not to overlap one on the other on a same plane
(2) an information recording medium provided with an electromagnetic wave barrier layer.

Now, an information recording medium of (1) and that of (2) above will be discussed in detail.

### Arrangement (1):

In a mode of carrying out an embodiment of the invention for (1) above, there is provided an information recording medium comprising a transparent substrate, an optical recording layer and an IC module, the IC module being provided with an IC chip and an antenna coil for an information exchanging operation of at least either recording information on the IC chip or reproducing information stored in the IC chip without bringing the IC chip and the information recording/reproducing apparatus into direct mutual contact, wherein the optical recording layer and the antenna coil are arranged on different respective planes and the antenna coil is arranged in a region not overlapping the region occupied by the optical recording layer.

In another node of carrying out an embodiment of the invention for (1) above, there is provided an information recording medium comprising a non-contact type IC module and an optical recording layer as information storage means, the IC module being provided with an IC chip and an internal antenna coil for an information exchanging operation of at least either recording information on the IC chip or reproducing information stored in the IC chip without bringing the IC chip and the information recording/reproducing apparatus into direct mutual contact, wherein the optical recording layer and the internal antenna coil are arranged on different respective planes in such a way that, when the information recording medium is set in position in an information recording/reproducing apparatus having an external antenna coil as means for recording information on and reproducing information from the IC module and an optical head arranged respectively on the opposite sides of the information recording medium, the external antenna coil and the optical head are not located oppositely with the information recording medium interposed therebetween. Now, these modes of carrying out embodiments of the invention will be described further by referring to the accompanying drawings.

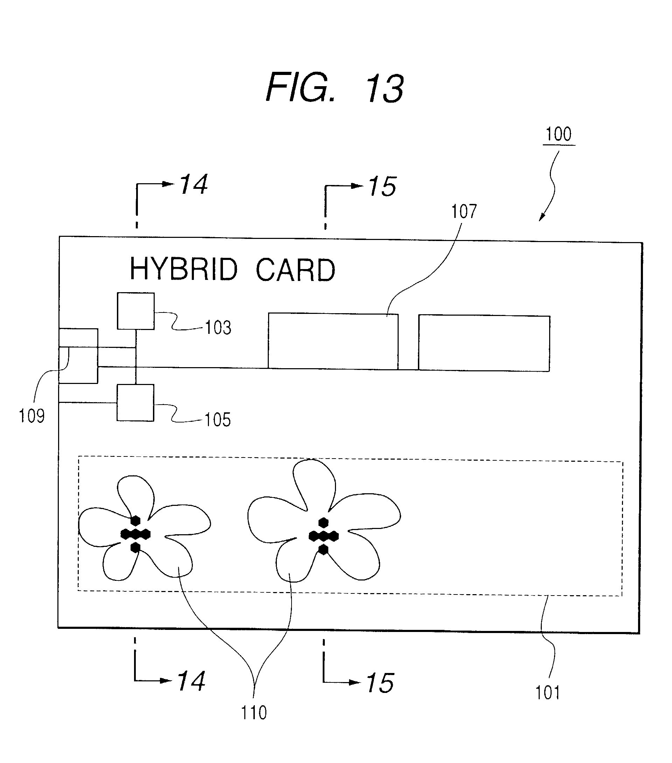

FIG. 13 of the accompanying drawings shows in plan view an embodiment of information recording medium realized in either of the above modes. The information recording medium 100 (hereinafter referred to as "hybrid card") comprising an IC memory and an optical recording layer as information storage means. Note that the side of the card where the optical recording layer is arranged to receive a beam of light for recording and reproducing information is shown. Referring to FIG. 13, the card comprises an optical recording region 101, an IC chip 103, a capacitor 105, a coil 107 and a wiring section 109. The wiring section 109 electrically connects the IC module 103, the capacitor 105 and the coil 107. Reference numeral 110 denotes the information visibly carried by the hybrid card.

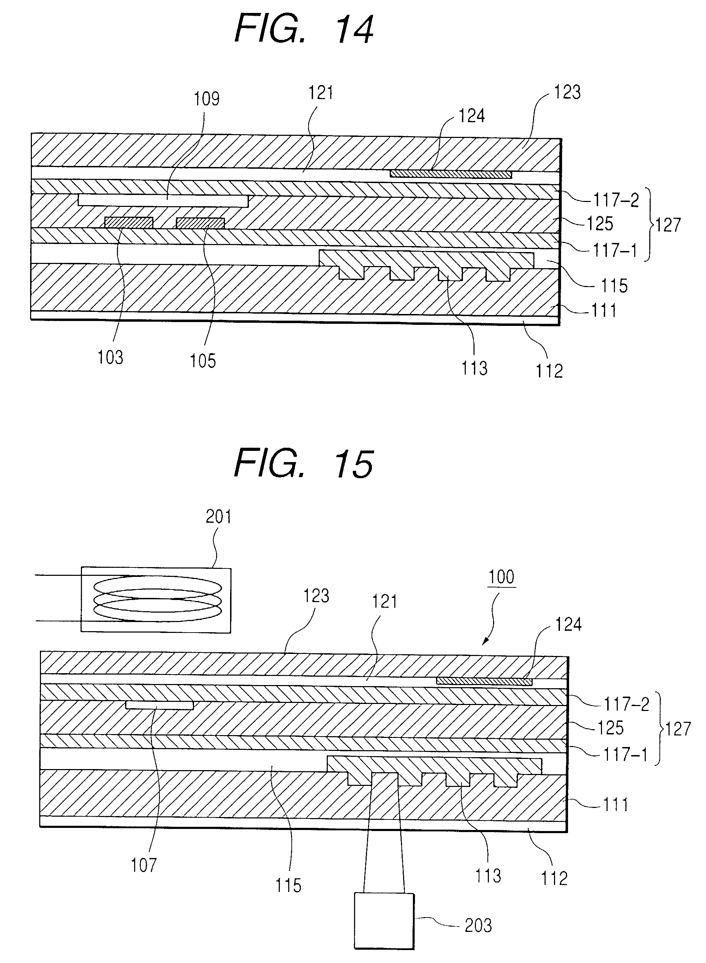

FIGS. 14 and 15 show cross sectional view of the embodiment of hybrid card of FIG. 13 taken along lines 14-14 and 15-15 respectively. In FIGS. 14 and 15, there are shown a transparent substrate 111, a hard coat layer 112 and an optical recording layer 113. Reference numeral 127 denotes an IC module that comprises IC module substrates 117-1 and 117-2, an IC chip 103, a capacitor 105, a coil 107 and a wiring section 109 connecting the above components and an anisotropically conductive adhesive layer 125. The IC module 127 is coupled to the surface of the transparent substrate 111 carrying thereon the optical recording layer 113 by means of an adhesive layer 115. A protective layer 123 is coupled to the outer surface of the IC module substrate 117-2 of the IC module 127 also by means of an adhesive layer 121. The protective layer 123 is provided on the inner surface thereof with a printed layer 124 that carries visible information 110.

The components of the above embodiment of hybrid card are then arranged in such a way that the coil 107 does not overlap the optical recording region 101 as shown in FIGS. 13 and 15. On the other hand, the optical information recording/reproducing apparatus to be used with the hybrid card comprises an optical head 203 for optical recording/reproduction of information that is to be located at the side of the transparent substrate 111 and an external coil 201 for driving the non-contact IC module of the hybrid card to record information on and reproduce information from the non-contact IC module 127 that is to be located at the side of the coil 107 when the card is inserted in position in the apparatus. Thus, as the coil is arranged at a position that does not overlap the optical recording region 101, the optical recording/reproducing head 203 is prevented from being placed vis-a-vis the external coil 201 with the hybrid card interposed therebetween within the recording/reproducing apparatus to minimize the adverse effect of the electromagnetic wave for driving the non-contact IC module that can be exerted on the actuator of the optical recording/reproducing head 203.

It will be appreciated that the remaining components of the IC module of the hybrid card including the IC chip 103 and the capacitor 105 are also preferably arranged at the positions that do not overlap the optical recording region 101 in order to minimize the adverse effect of the electromagnetic wave for driving the IC module that can be exerted on the optical recording/reproducing head to make the latter malfunction. If the optical recording layer transmits visible light and information is printed on the inner surface of the protective substrate 123, visible information 110 can be hidden by some of the components of the IC module that are arranged to overlap the optical recording layer. Therefore, such an overlapping arrangement of the components of the IC module and the optical recording layer substantially reduces the area on which visible information can be carried by the hybrid card for display. However, in the case of the above described embodiment where the IC chip and the capacitors are arranged out of the optical recording region, the entire surface area of the optical recording region 101 can be utilized for displaying visible information.

Now, a method of manufacturing a hybrid card as shown in FIGS. 13 through 15 will be described. A card-shaped information recording medium preferably has a size same as that of a credit card (e.g., length 85mm, width 54mm, thickness 0.68 to 0.84mm). The transparent substrate where an optical recording layer is formed preferably has a thickness of about 0.3 to 0.4mm to minimize the adverse effect of the foreign particles adhering to the surface thereof that can appear in recording/reproducing operations, more specifically to hold the particles out of focus. Thus, the IC module preferably has a thickness of 0.54mm at most, more preferably between 0.2 and 0.3mm if the printed layer and the protective layer to be arranged are taken into consideration.

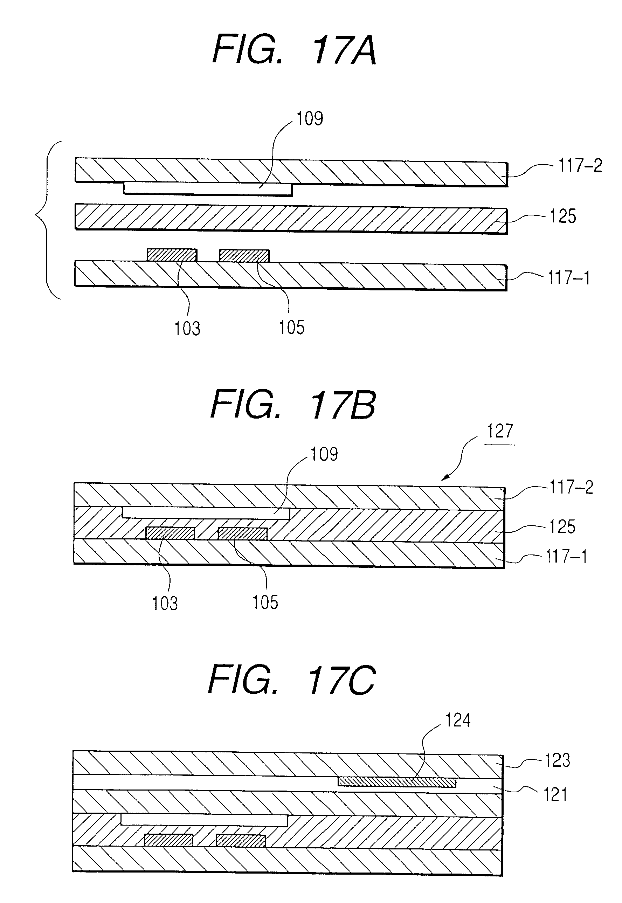

An IC module 127 having the above described thickness can be manufactured in a manner as described below. Referring to FIG. 17A, an IC module substrate 117-1 on which an IC chip 103 and a capacitor 105 are mounted and an IC module substrate 117-2 carrying thereon a printed wiring section 109 and a printed coil 107 (not shown) will be firstly provided. The IC chip 103 and the capacitor 105 are mounted in such a way that their terminals are located vis-a-vis the wiring section 109 when the two substrates are put together. Then, the IC module substrates 117-1 and 117-2 will be bonded to produce an IC module 127 by means of anisotropically conductive adhesive film (e.g., ANISOLM: tradename, available from Hitachi Chemical Co., Ltd.) 125 that flows electricity only in the direction of the thickness (FIG. 17B). Subsequently, a protective layer 123 will be bonded to the outer surface of IC module substrate 117-2 by means of an adhesive layer 121 (FIG. 17C). This technique of arranging the two IC module substrates 117-1 and 117-2 such that the connection terminal of the IC chip and the wiring section face each other and bonding them together by means of an anisotropically conductive adhesive agent to electrically connect the wiring section and the connection terminal of the IC chip provides a thin IC module having a reliable connection between the connection terminal of the IC chip and the wiring section that would not be broken if the IC module is bent. The IC module substrates 117-1 and 117-2 are preferably made of a material that can bear the IC chip and the capacitor mounted thereon if they have a thickness as small as 50 to 150µm and is adapted to form a wiring section thereon by means of electroconductive ink. Materials that can be used for the IC module substrates include polyethyleneterephthalate, polycarbonate film and polyimide film. The IC chip and the capacitor to be mounted on the IC module preferably has a thickness between 0.5 and 200µm.

Any appropriate adhesive agent may be used to bond the IC module 127 and the protective layer 123 if it can hold them together with a predetermined adhesive force. If visible information is displayed in the optical recording region so that it may be visually recognized through the optical recording layer 113 and the transparent substrate 111, a printed layer 124 containing the visible information 110 is preferably provided on the inner surface of the protective layer 123 in an area corresponding to that of the optical recording region 101.

The thin IC module 127 obtained by the above method will then be bonded to a transparent substrate comprising an optical recording layer and prepared in a manner as described below.

The surface of the transparent substrate 111 will be firstly preformatted and then an optical recording layer 113 will be formed thereon. The term "preformatting" as used herein refers to an operation of producing track grooves for track servo control of optical information recording/reproduction and pits representing data and operating as ROM. The transparent substrate is preferably transparent at least relative to the optical beam for recording information on and reproducing information from the optical recording layer. If the visible information is to be visually recognized through the transparent substrate, the transparent substrate should be transparent relative to visible light. Materials that can be used for the transparent substrate include bisphenol A-type polycarbonate resin, acrylic resin, polyvinylchloride, polyethyleneterephthalate, polystyrene, polysulfone and amorphous polyolefin resin. The optical recording layer may be made of any material that can appropriately be used for the layer. When visible information is displayed in the optical recording region, an organic coloring matter that transmits visible light is preferably used for the optical recording layer. Techniques that can be used for forming the optical recording layer include vacuum deposition, (evaporation, sputtering, etc.) and wet application.

The IC module and the transparent substrate provided with an optical recording layer that are prepared in the above described respective processes are then bonded together by means of an adhesive layer 115 such that the IC module substrate 117-1 and the optical recording layer 113 are disposed oppositely relative to each other.

The adhesive agent of the adhesive layer 115 is preferably made of a material that does not chemically affect the optical recording layer and the components of the IC module nor damage the optical recording layer and the IC module during the bonding process. Examples of adhesive agents that can be used for the purpose of the invention include hot-melt type adhesive agents, heat-softening/cold-setting adhesive agents and pressure sensitive adhesive agents. Specific examples of hot-melt type adhesive agents include ethylene-vinylacetate copolymer, ethylene-acrylic acid copolymer, ethylene-acrylate copolymer, ethylene-acrylic acid-polypropylene ternary copolymer, ethylene-acrylate-maleic anhydride copolymer. Heat-softening/cold-setting adhesive agents that can be used for the purpose of the invention include silicon type adhesive agents.

### Arrangement (2):

In a mode of carrying out the invention for (2) above, there is provided an information recording medium comprising a transparent substrate, an optical recording layer, an IC module having an IC chip and an antenna coil for an information exchanging operation of at least either recording information on the IC chip or reproducing information stored in the IC chip without bringing the IC chip and the information recording/reproducing apparatus into direct mutual contact, wherein the transparent substrate, the optical recording layer and the IC module are arranged in the above listed order, and an electromagnetic wave barrier layer is arranged on the side of the transparent substrate away from the antenna coil. An information recording medium carried out in the above mode is most effective if used with an information recording/reproducing apparatus that comprises an optical head for recording information on and reproducing information from the optical recording layer, an information recording medium receiving table for receiving the information recording medium and a coil for at least either recording information on the IC chip or reproducing information stored in the IC chip, the coil and the optical head being arranged in such a way that, when the information recording medium is set in position on the information recording medium receiving table, they are located oppositely with the information recording medium interposed therebetween, the information recording medium receiving table being so configured that, when the information recording medium is set in position on the information recording medium receiving table, it is electrically connected to the electromagnetic wave barrier layer to ground it.

In another mode of carrying out the invention for (2) above, there is provided an information recording medium comprising a transparent substrate, an optical recording layer, an IC module having an IC chip and an antenna coil for an information exchanging operation of at least either recording information on the IC chip or reproducing information stored in the IC chip without bringing the IC chip and the information recording/reproducing apparatus into direct mutual contact, wherein the transparent substrate, the optical recording layer and the IC module are arranged in the above listed order, an electromagnetic wave barrier layer is arranged on the side of the transparent substrate away from the antenna coil, and wherein an electroconductive terminal arranged at a position to be brought into contact with an information recording/reproducing apparatus for recording/reproducing information, the electroconductive terminal being connected to the electromagnetic wave barrier layer. An information recording medium carried out in the above mode is most effective if used with an information recording/reproducing apparatus that comprises an optical head for recording information on and reproducing information from the optical recording layer, an information recording medium receiving table for receiving the information recording medium and a coil for at least either recording information on the IC chip or reproducing information stored in the IC chip, the coil and the optical head being arranged in such a way that, when the information recording medium is set in position on the information recording medium receiving table, they are located oppositely with the information recording medium interposed therebetween, the information recording medium receiving table being so configured that, when the information recording medium is set in position on the information recording medium receiving table, it is electrically connected to the electromagnetic wave barrier layer to ground it. Now, the embodiments of information recording medium and information recording/reproducing apparatus carried out in the above modes will be described by referring to the accompanying drawings.

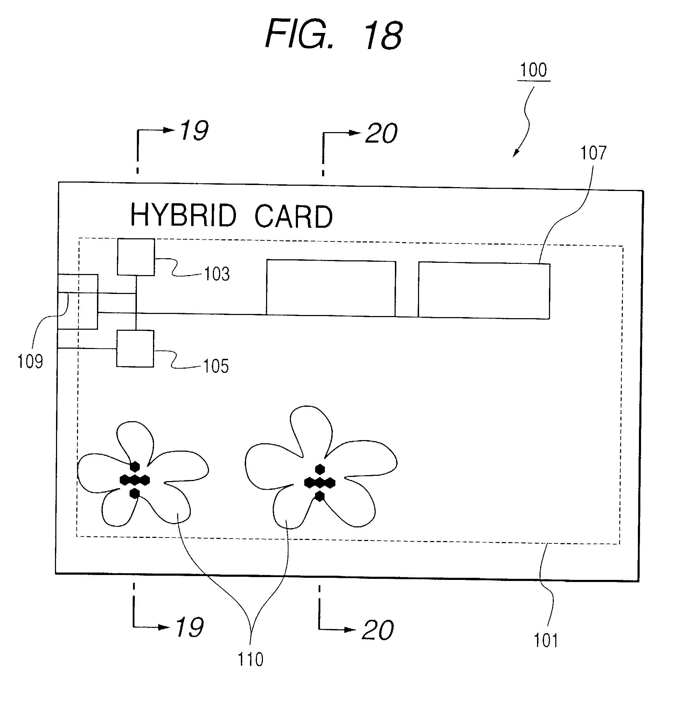

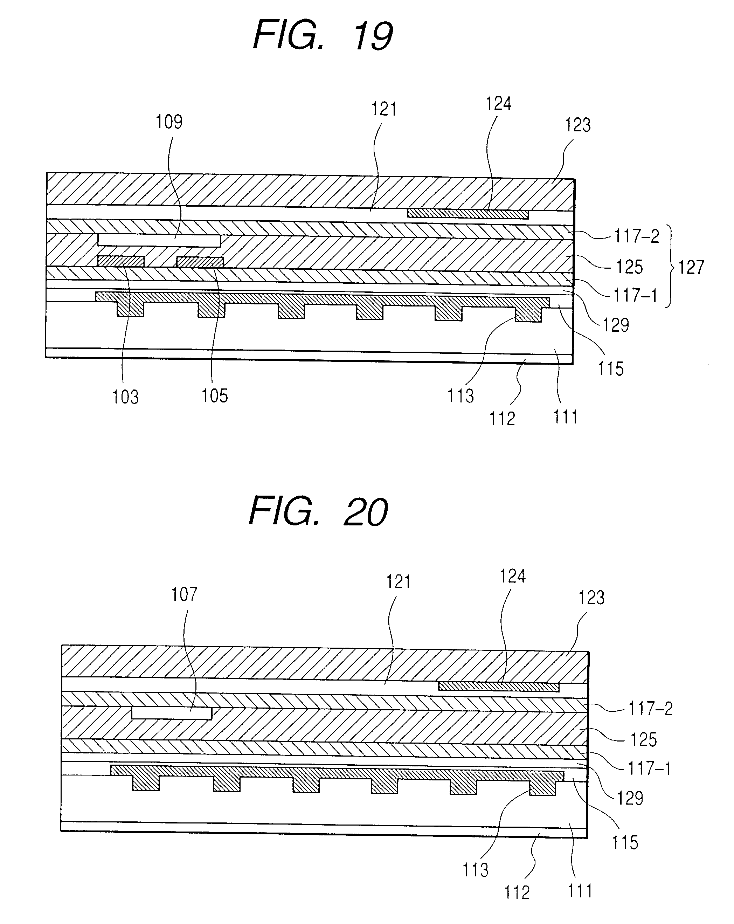

FIG. 18 of the accompanying drawings shows in plan view an embodiment of information recording medium 100 (hereinafter referred to as "hybrid card") realized in either of the above modes and comprising a plurality of information storage means, more specifically an IC chip and an optical recording layer. Note that the side of the card where the optical recording layer is arranged to receive a beam of light for recording and reproducing information is shown. Referring to FIG. 18, the card comprises an optical recording region 101, an IC chip 103, a capacitor 105, a coil 107 and a wiring section 109. The wiring section 109 electrically connects the IC chip 103, the capacitor 105 and the coil 107. Reference numeral 110 denotes the information visibly carried by the hybrid card. FIGS. 19 and 20 show cross sectional view of the embodiment of hybrid card of FIG. 18 taken along lines 19-19 and 20-20 respectively. In FIGS. 19 and 20, there are shown a transparent substrate 111, a hard coat layer 112 and an optical recording layer 113. Reference numeral 127 denotes an IC module that comprises IC module substrates 117-1 and 117-2, an IC chip 103, a capacitor 105, a coil 107 and a wiring section 109 connecting the above components and an anisotropically conductive adhesive layer 125. The IC module 127 is coupled to the surface of the transparent substrate 111 carrying thereon the optical recording layer 113 by means of an adhesive layer 115. A protective layer 123 is coupled to the outer surface of the IC module substrate 117-2 of the IC module 127 also by means of an adhesive layer 121. The protective layer 123 is provided on the inner surface thereof with a printed layer 124 that carries visible information 110. Reference numeral 129 denotes an electromagnetic wave barrier layer 129 containing an electroconductive material and adapted to prevent the optical head from being adversely affected by the electromagnetic waves generated by external coil 131 and the internal coil 107. The electromagnetic wave barrier layer 129 can reduce any electromagnetic waves trying to pass through the electromagnetic wave barrier layer as the electroconductive material contained therein generates an eddy current loss, thereby preventing the electromagnetic wave generated by the external coil 201 from penetrating into the optical head side if the optical head and the external coil for driving the IC module are located vis-a-vis with the hybrid card interposed therebetween within the information recording/reproducing apparatus for the hybrid card.

When the effect of the external coil for driving the IC module for recording/reproducing information on the optical head is shut off or suppressed by means of an electromagnetic wave barrier layer 129 containing an electroconductive material, the electromagnetic wave barrier layer 129 preferably shows an electroconductivity of not less than 1×10⁻⁵S/cm (where S is the reciprocal number of the resistance of the barrier layer, i.e., resistivity of 100kΩcm or less).

Materials that can be used for the electroconductive layer are electroconductive materials that can suitably be processed to produce a thin film. Examples of such materials include ITO (In₂O₃+SnO₂), gold, palladium, tellurium, nickel aluminum, alloys of any of these, materials obtained by dispersing metal such as silver into polymer, electroconductive polymers such as polypyrrole and polyacetylene, electroconductive film such as carbon film, electroconductive ink obtained by dispersing an electroconductive pigment into a mixture of solvent and polymer or composite film prepared by using any of the above materials. For the purpose of the invention, electroconductive ink refers to ink obtained by mixing carbon black and ethylcellulose into a solvent of ethylacetate and cellosolve, commercially available ink such as FA-320 (trade name: available from OSAKA ASAHI CHEMICAL Co., Ltd.), silver paste, and copper paste. The use of electroconductive ink is recommendable because a hybrid card can be manufactured at low cost by using an appropriate printing method.

A hybrid card can be prepared by means of an appropriate technique such as sputtering or some other vacuum film forming technique or printing. To meet the above requirements, the electroconductive, electromagnetic wave barrier layer 129 preferably has a thickness between 500 and 5,000 angstroms if it comprises metal or between 5 and 100µm if it comprises electroconductive ink.

More specifically, as an example, the electromagnetic wave barrier layer 129 having an electroconductivity of 150S/cm may be prepared by applying an electroconductive coating composition containing 35 weight portions of particulate carbon black having a particle diameter of 0.1µm (e.g., Lamp Black: trade name, available from Degusa Co.), 25 weight portions of ethylcellulose, 10 weight portions of methacrylate resin, 10 weight portions of phenol resin, 15 weight portions of ethylacetate and 5 weight portions of a cellosolve derivative, the ethylacetate and the cellosolve derivative being used as solvent, by screen printing to produce a dry film with a film thickness of about 10µm.

Alternatively, the electromagnetic wave barrier layer 129 may be prepared by forming a nickel thin film having a film thickness of 1,000 angstroms and an electroconductivity of 400S/cm by means of a sputtering technique.

Still alternatively, a transparent electromagnetic wave barrier layer 129 may be prepared by forming an ITO film (In₂O₃+SnO₂) having a film thickness of 600 angstroms and an electroconductivity of 42S/cm also by means of a sputtering technique. Such an electromagnetic wave barrier wave shows a transmittivity of 94% relative to an 833nm semiconductor laser beam.

In an information recording medium comprising an electromagnetic wave barrier layer 129 containing an electroconductive material, the electromagnetic wave barrier layer 129 is preferably at least partly exposed to the surface or an edge of the hybrid card (see FIGS. 19 and 20). When the electromagnetic wave barrier layer 129 containing an electroconductive material is entirely or partly exposed to the surface or an edge of the hybrid card, the exposed area of the electromagnetic wave barrier layer contacts with the moisture contained in the air to reduce the electric potential of the electromagnetic wave barrier layer 129, thereby increasing the effect of shutting off any external electromagnetic waves.

Now, a method of manufacturing a hybrid card as shown in FIGS. 18 through 20 will be described. A card-shaped information recording medium preferably has a size same as that of a credit card (e.g., length 85mm, width 54mm, thickenss 0.68 to 0.84mm). The transparent substrate where an optical recording layer is formed preferably has a thickness of about 0.3 to 0.4mm to minimize the adverse effect of the foreign particles adhering to the surface thereof that can appear in recording/reproducing operations, more specifically to hold the particles out of focus. Thus, the IC module preferably has a thickness of 0.54mm at most, more preferably between 0.2 and 0.3mm if the printed layer and the protective layer to be arranged are taken into consideration.

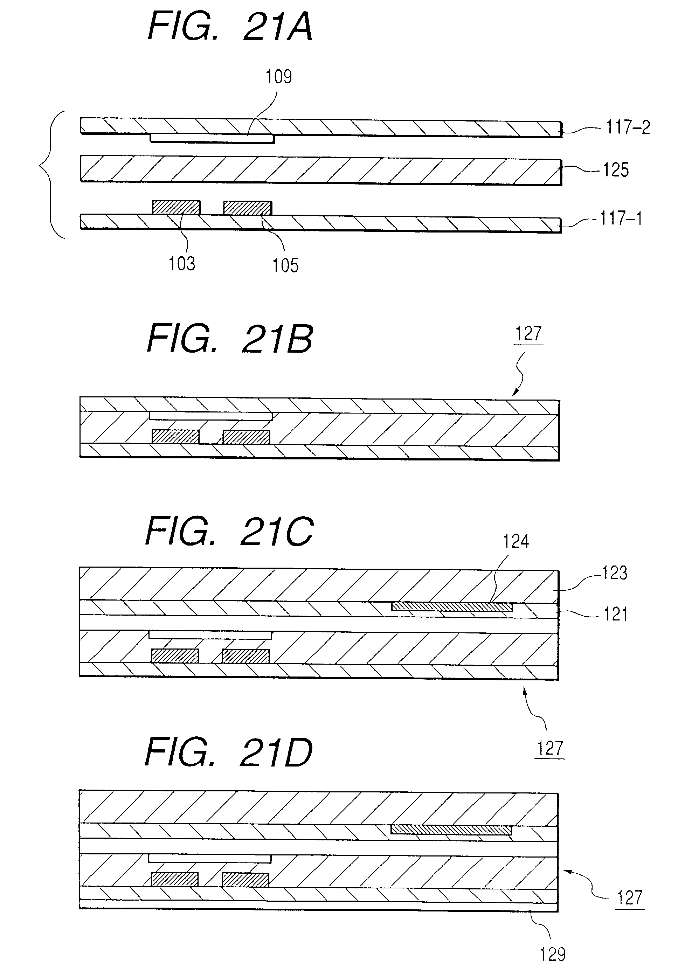

An IC module 127 having the above described thickness can be manufactured in a manner as described below. Referring to FIG. 21A, an IC module substrate 117-1 on which an IC chip 103 and a capacitor 105 are installed and an IC module substrate 117-2 carrying thereon a coil 107 (not shown) and a wiring section 109 formed by electroconductive printing will be firstly provided. The IC chip 103 and the capacitor 105 are mounted on the IC module substrate 117-1 in such a way that their terminals are located vis-a-vis the wiring section 109 when the two substrates are put together. Then, the IC module substrates 117-1 and 117-2 will be bonded to produce an IC module 127 by means of anisotropically conductive adhesive film (e.g., ANISOLM: tradename, available from Hitachi Chemical Co., Ltd.) 125 that flows electricity only in the direction of the thickness (FIG. 21B). Subsequently, a protective layer 123 will be bonded to the outer surface of IC module substrate 117-2 by means of an adhesive layer 121 (FIG. 21C). This technique of arranging the two IC module substrates 117-1 and 117-2 such that the connection terminal of the IC chip 103 and the capacitor 105 and the wiring section 109 face each other and bonding them together by means of an anisotropically conductive adhesive agent to electrically connect the wiring section 109 and the connection terminals of the IC chip 103 and the capacitor 105 provides a thin IC module having a reliable connection between the connection terminal and the wiring section 109 that would not be broken if the IC module is bent. The IC module substrates 117-1 and 117-2 are preferably made of a material that can bear the IC chip and the capacitor mounted thereon if they have a thickness as small as 50 to 150µm and is adapted to form a wiring section thereon by means of electroconductive ink. Materials that can be used for the IC module substrates include polyethyleneterephthalate, polycarbonate film and polyimide film. The IC chip and the capacitor to be mounted on the IC module preferably has a height between 0.5 and 200µm. Any appropriate adhesive agent may be used to bond the IC module 127 and the protective layer 123 if it can hold them together with a predetermined adhesive force. If visible information is displayed in the optical recording region so that it may be visually recognized through the optical recording layer 113 and the transparent substrate 111, a printed layer 124 containing the visible information 110 is preferably provided on the inner surface of the protective layer 123 in an area corresponding to that of the optical recording region 101.

Then, an electromagnetic wave barrier layer 129 is formed on the surface of the IC module substrate 117-1 (FIG. 21D). The electromagnetic wave barrier layer 129 may be formed typically by applying an electroconductive coating composition by means of screen printing. More specifically, as an example, the electromagnetic wave barrier layer 129 having an electroconductivity of 150S/cm may be prepared by applying an electroconductive coating composition containing 35 weight portions of particulate carbon black having a particle diameter of 0.1µm (e.g., Lamp Black: trade name, available from Degusa Co.), 25 weight portions of ethylcellulose, 10 weight portions of methacrylate resin, 10 weight portions of phenol resin, 15 weight portions of ethylacetate and 5 weight portions of a cellosolve derivative, the ethylacetate and the cellosolve derivative being used as solvent, by screen printing to produce a dry film with a film thickness of about 10µm.

The thin IC module 127 obtained by the above method will then be bonded to a transparent substrate comprising an optical recording layer and prepared in a manner as described below.

The surface of the transparent substrate 111 will be firstly preformatted and then an optical recording layer 113 will be formed thereon. The term "preformatting" as used herein refers to an operation of producing track grooves for track servo control of optical information recording/reproduction and pits representing data and operating as ROM. The transparent substrate is preferably transparent at least relative to the optical beam for recording information on and reproducing information from the optical recording layer. If the visible information is to be visually recognized through the transparent substrate, the transparent substrate should be transparent relative to visible light. Materials that can be used for the transparent substrate include bisphenol A-type polycarbonate resin, acrylic resin, polyvinylchloride, polyethyleneterephthalate, plystyrene, polysulfone and amorphous polyolefin resin. The optical recording layer may be made of any material that can appropriate be used for the layer. When visible information is displayed in the optical recording region, an organic coloring matter that transmits visible light is preferably used for the optical recording layer. Techniques that can be used for forming the optical recording layer include vacuum deposition, (evaporation, sputtering, etc.) and wet application.

The IC module and the transparent substrate provided with an optical recording layer that are prepared in the above described respective processes are then bonded together by means of an adhesive layer 115 such that the IC module substrate 117-1 and the optical recording layer 113 are disposed oppositely relative to each other. The adhesive agent of the adhesive layer 115 is preferably made of a material that does not chemically affect the optical recording layer and the components of the IC module nor damage the optical recording layer and the IC module during the bonding process. Examples of adhesive agents that can be used for the purpose of the invention include hot-melt type adhesive agents, heat-softening/cold-setting adhesive agents and pressure sensitive adhesive agents. Specific examples of hot-melt type adhesive agents include ethylene-vinylacetate copolymer, ethylene-acrylic acid copolymer, ethylene-acrylate copolymer, ethylene-acrylic acid-polypropylene ternary copolymer, ethylene-acrylate-maleic anhydride copolymer. Heat-softening/cold-setting adhesive agents that can be used for the purpose of the invention include silicon type adhesive agents.

The electromagnetic wave barrier layer 129 may be a layer containing a ferromagnetic material. An electromagnetic wave barrier layer 129 containing a ferromagnetic material can swerve any electromagnetic waves out of the card under the effect of the magnetic field of the ferromagnetic material to consequently reduce the electromagnetic wave that passes through the electromagnetic wave barrier layer 129. As a result, the electromagnetic wave transmitted from the external coil for driving the IC chip is shut off to prevent any malfunction of the actuator that controls the laser beam to be used for optically recording/reproducing information. Materials that can be used as the ferromagnetic material contained in the electromagnetic wave barrier layer are ferromagnetic materials that can suitably be processed to produce a thin film. Examples of such materials include metals such as iron, cobalt and nickel, alloys of iron and cobalt, alloys of chromium and tellurium, ferromagnetic metal oxides including ferrite and composite materials obtained by dispersing fine particles of any of the above materials in resin. An electromagnetic wave barrier layer can be prepared by forming a film of a selected one of the above materials on a card by means of a vacuum film forming technique such as sputtering or a printing technique and orienting the material by applying a strong magnetic field to it. The ferromagnetic electromagnetic wave barrier layer 129 preferably has a thickness between 500 and 5,000 angstroms if it comprises metal or between 5 and 100µm if it comprises fine particles of a ferromagnetic material dispersed in resin. When the effect of the external coil for driving the IC module for the operation of recording/reproducing information by means of the IC module on the optical head is eliminated by the ferromagnetic, electromagnetic wave barrier layer 129, the saturation magnetic moment is preferably 1 gauss or more although it may be dependent on the type of the IC module, the intensity of the electromagnetic wave generated by the external coil and other factors.

The position where the electromagnetic wave barrier layer 129 placed is not limited to the one shown in FIGS. 18 through 20 so long as the barrier layer 129 does not adversely affect the operation of the external coil of the recording/reproducing apparatus for driving the IC chip by way of the internal coil of the information recording medium. More specifically, only the requirement to be met is that the electromagnetic wave barrier layer 129 is not found between the external coil of the information recording/reproducing apparatus and the internal coil 107 of the information recording medium and, preferably, it is located closer to the transparent substrate than to the internal coil 107. For example, referring to FIGS. 19 and 20, it may be arranged at least at a position on the outer surface of the hard coat layer 112, between the hard coat layer 112 and the transparent substrate 111, between the transparent substrate 111 and the optical recording layer 113, on the optical recording layer 113 or between the IC module substrate 117-1 and the wiring section 109.

The electromagnetic wave barrier layer 129 preferably has the following properties in addition to the electroconductivic or the ferromagnetic property depending on the location in the card where it is arranged. For example, if the electromagnetic wave barrier layer 129 is arranged between the IC module and the optical recording layer and the printed layer carrying visually recognizable visible information is arranged on the inner surface of the protective layer so that it may be visible by way of the optical recording layer and the transparent substrate, the electromagnetic wave barrier layer 129 is preferably made of a transparent material that transmits visible light by 50 to 100%, preferably 70 to 100%. If, on the other hand, the electromagnetic wave barrier layer 129 is arranged at a position on the outer surface of the hard coat layer 112, between the hard coat layer 112 and the transparent substrate 111 or between the transparent substrate 111 and the optical recording layer 113 as shown in FIGS. 19 and 20, the electromagnetic wave barrier layer 129 is preferably transparent relative to the beam of light to be used for recording/reproducing information by 70% or more. Materials that can be used to meet the above requirement include ITO and electroconductive polymers.

If the electromagnetic wave barrier layer 129 is arranged on the surface of the hard coat layer 112 in FIGS. 19 and 20, it is preferably made of a highly transparent, damage-resistant and hard material. The material preferably has a Rockwell hardness of M70 or more (ASTM D 7859). Specific materials that are highly transparent and hard and satisfy the above requirements also include ITO.

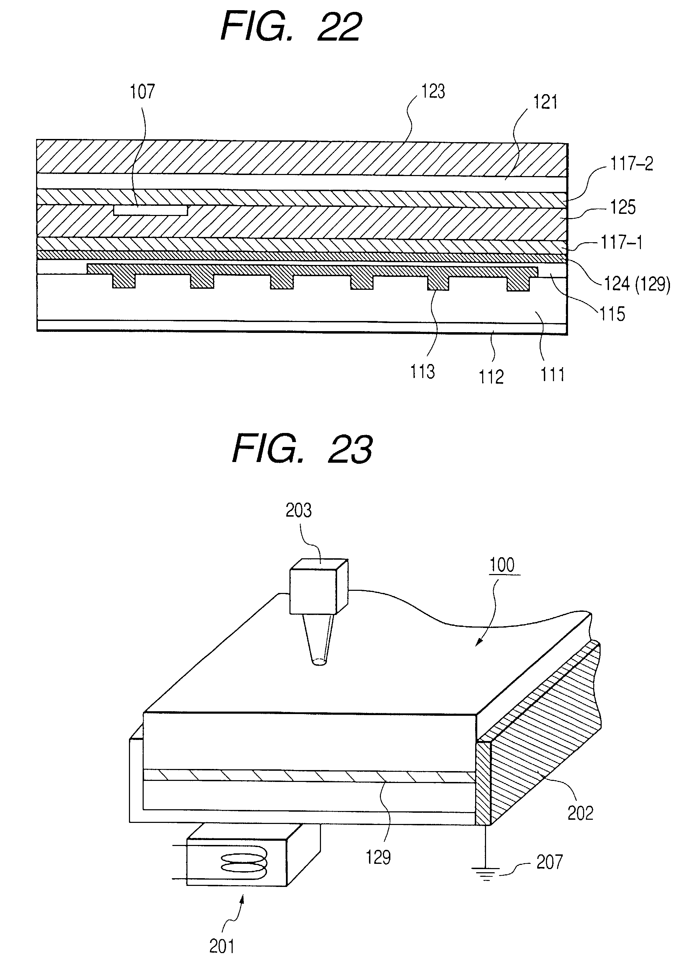

FIG. 22 is a schematic cross sectional view of another embodiment of information recording medium according to the invention. This embodiment is characterized in that one of the basic component layers of the information recording medium operates also an electromagnetic wave barrier layer 129. More specifically, at least one of the hard coat layer 112, the transparent substrate 111, the optical recording layer 113, the adhesive layer 115, the IC holding substrate 117-1 and the printed layer 124 operates as electromagnetic wave barrier layer 129. Preferably, as many as possible component layers operate as electromagnetic wave barrier layer 129 in order to improve the electromagnetic wave barrier effect. In order to cause one or more than one component layers of an optical recording medium to operate as electromagnetic wave barrier layer 129, the layers are made to contain a material that possess the electroconductivity or the ferromagnetism required for the purpose of the invention. For example, a hot melt adhesive sheet having a thickness of 70µm is produced by extrusion, using a mixture containing an ethylene-acrylic acid type hot melt adhesive agent (e.g., KuranBeter 04121: tradename, available from KURABO) by 90 weight portions and antimony-doped tin oxide powder by 10 weight portions (e.g., T-1: tradename, available from Mitsubishi Metal Corporation) that is kneaded well at 140°C. The adhesive sheet shows an electroconductivity of 6.5×10²S/cm and operates well as electromagnetic wave barrier layer 129.

A hot melt adhesive sheet having a thickness of 70µm and obtained by extrusion, using a mixture of the above hot melt adhesive agent by 65 weight portions and powdery nickel having a particle size of 0.1µm by 35 weight portions that is kneaded well at 140°C shows a saturation magnetic moment of 3 gausses and operates well as electromagnetic wave barrier layer 129 when used as an adhesive layer of an information recording medium.

A printed layer having a thickness of 10µm and formed by using an electroconductive paint containing carbon black having a particle size of 0.1µm (available from Degusa Co.) by 35 weight portions as pigment, ethylcellulose by 25 weight portions, methacrylate resin by 10 weight portions, phenol resin by 10 weight portions, ethylacetate by 15 weight portions and cellosolve derivative by 5 weight portions shows an electroconductivity of 150S/cm and operates well as electromagnetic wave barrier layer 129 if it is formed at least in an area where the optical recording layer and the internal coil 107 of the IC module overlap each other to carry visible information in an information recording medium according to the invention.

An ITO (In₂O₃+SnO₂) film having a thickness of 600 angstroms was formed on a polycarbonate substrate by means of sputtering. The formed film showed an electroconductivity of 4.2×10S/cm, a transmittivity of 94% relative to a semiconductor laser beam having a wavelength of 833nm and a Rockwell hardness of M100 and could be used as a hard coat layer also functioning as electromagnetic wave barrier layer 129.

In an experiment, an optical card substrate having a thickness of 0.4mm was prepared by using a matrix of polymethylmethacrylate and growing polypyrrol in the matrix through electrolyic polymerization of pyrrol and the obtained substrate showed a transmittivity of more than 80% relative to a semiconductor laser beam having a wavelength of 833nm and an electroconductivity of 3×10²S/cm. A transparent substrate 111 obtained by using the resin also operates well as electromagnetic wave barrier layer 129.

A 5µm thick layer obtained by dispersing silver particles with a particle size of 0.5µm into a gelatin matrix by 65wt% can produce pits when irradiated with a semiconductor laser beam and hence can operates as optical recording layer. The obtained optical recording layer can operates as electromagnetic wave barrier layer 129 in view of the fact that it shows an electroconductivity of 10S/cm.

A reflective layer formed on the optical recording layer to show a reflectivity of more than 10% and a transmittivity of more than 10% relative to a laser beam can also be used as electromagnetic wave barrier layer 129. Materials that can be used for preparing an electromagnetic wave barrier layer 129 having both electroconductivity and reflectivity include metals such as gold, palladium, tellurium and aluminum or alloys thereof, composite film of any of such materials and a material obtained by dispersing metal such as silver in polymer. If the electromagnetic wave barrier layer 129 is formed in an area other than the above specified area, any of the above listed electroconductive or ferromagnetic materials can be used for it. If the visible information contained in the layer underlying the electromagnetic wave barrier layer 129 and located at the above specified position is to be visually recognized through the latter from the side of the optical recording layer, it may also be made of any of the above listed electroconductive and transparent materials.

The electromagnetic wave barrier effect of an information recording medium comprising an electromagnetic wave barrier layer 129 that contains an electroconductive material, which layer is partly exposed as described above, will be guaranteed when it is used with an information recording/reproducing apparatus having a configuration as described above. FIG. 23 is a schematic perspective view showing the inside of an information recording/reproducing apparatus that can be used with a hybrid type information recording medium comprising an electromagnetic wave barrier layer 129 that contains an electroconductive material, which layer is partly exposed, and has a configuration adapted to connect the grounding potential of its electric circuit to the electromagnetic wave barrier layer 129 of the information recording medium whose electromagnetic wave barrier layer 129 is partly exposed at an edge thereof. In FIG. 23, reference numeral 202 denotes a table for receiving an information recording medium having a part (shaded area) made of an electroconductive material. As seen, the table carries thereon an information recording medium 100 and is held in contact with the electromagnetic wave barrier layer 129 of the medium exposed at an edge of the information recording medium and electrically connected to the member 207 of the apparatus showing the ground potential. With an apparatus having the above described configuration, the electromagnetic wave produced by the coil 201 of the apparatus passes through the coil 107 of the information recording medium and flows to the ground potential 207 of the apparatus by way of the electromagnetic wave barrier layer 129 and the table 202 so that the electromagnetic wave barrier layer 129 will show a high electromagnetic wave barrier effect. The electromagnetic wave barrier layer 129 may be exposed along an entire edge of the medium or, alternatively, at part thereof if the card holder and the exposed area are electrically connected to a satisfactory extent.

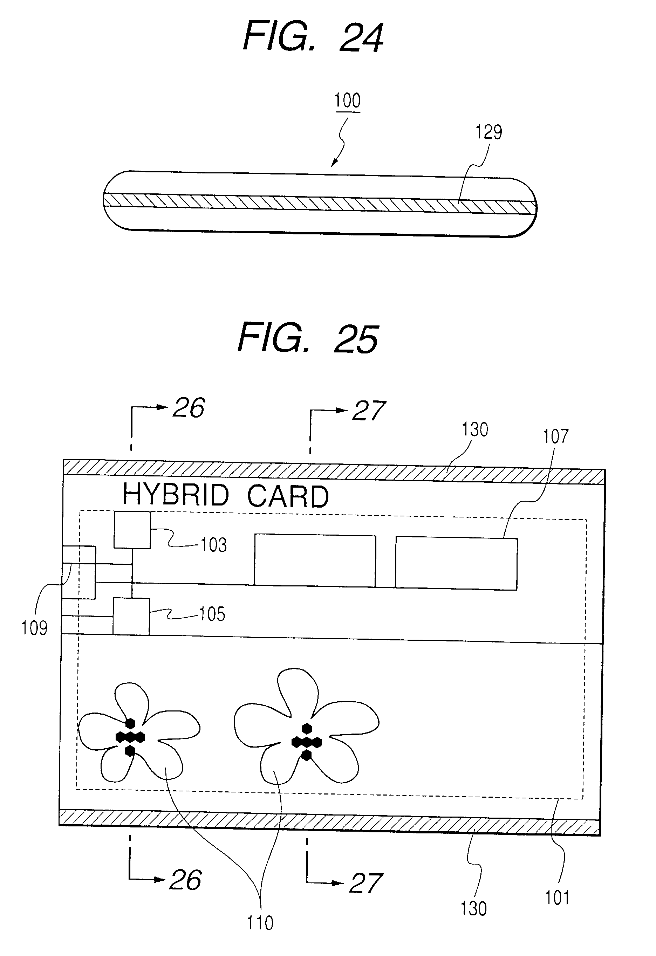

In order to ensure the contact of the barrier layer 129 of the information recording medium and the information recording medium receiving table of the above described information recording/reproducing apparatus, the information recording medium may have a cross section as shown in FIG. 24 at the above edge, where the opposite ends are rounded and the barrier layer is most extended. With such an arrangement, the barrier layer and the card holder will reliably come into contact with each other to improve the reliability of the electromagnetic wave barrier effect of the apparatus.

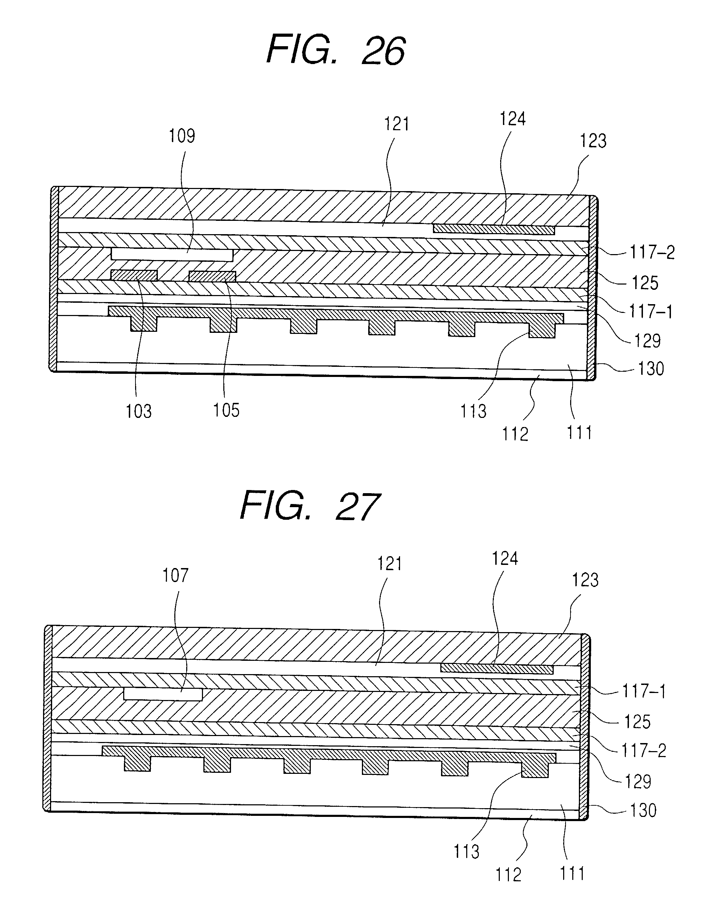

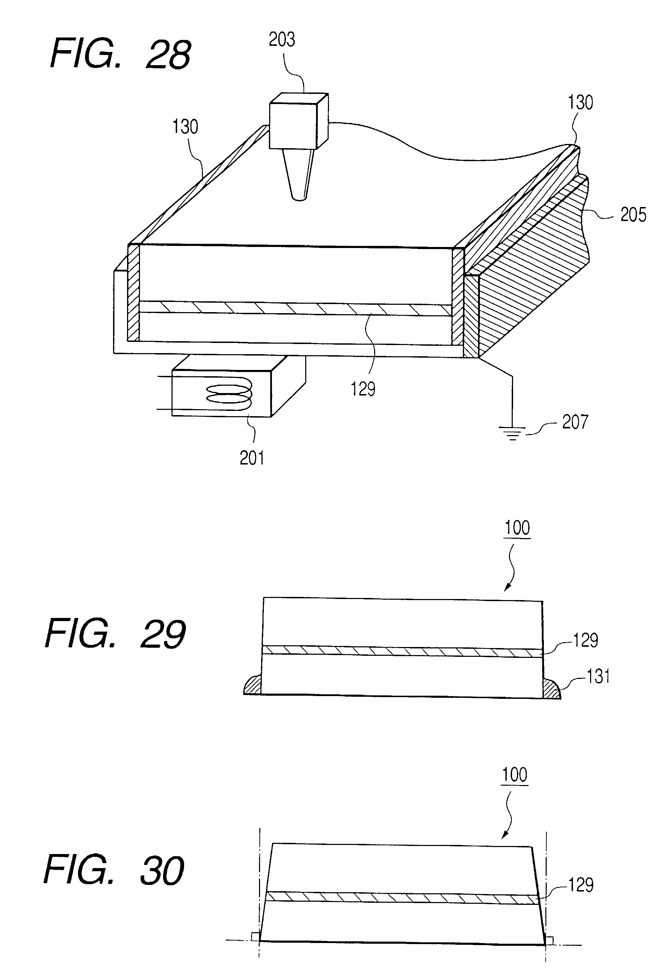

FIG. 25 is a schematic plan view of still another embodiment of a hybrid card according to the invention and having an electromagnetic wave barrier layer as seen from the side for irradiating the optical recording layer of the card with a beam of light to record/reproduce information. FIGS. 26 and 27 are schematic cross sectional views of the embodiment of FIG. 25 taken along lines 26-26 and 27-27 respectively. FIG. 28 is a schematic perspective view of an information recording/reproducing apparatus that can be used with such a hybrid card, showing the inside thereof.

The embodiment of hybrid card differs from the one shown in FIGS. 18 through 20 in that the former is provided along an edge thereof with an electroconductive terminal 130. In the case of the embodiment of hybrid card shown in FIGS. 18 through 20, the eddy current generated in the electromagnetic wave barrier layer 129 is preferably moved out of the electromagnetic wave barrier layer in order to make the barrier layer operate effectively so that the electromagnetic wave barrier layer 129 is partly exposed at an edge of the hybrid card and electrically connected to the grounded potential of the information recording/reproducing apparatus. However, it may be difficult to reliably connect the electromagnetic wave barrier layer of the hybrid card to the grounded potential of the information recording/reproducing apparatus simply by exposing the barrier layer at an edge of the card depending on the process of manufacturing the card. For example, there is a known process of manufacturing hybrid cards out of a substrate having a large work size, where cards are cut to the proper size after passing through the steps of printing visible information, forming a recording layer, forming an electromagnetic wave barrier layer and laying a non-contact IC sheet. While various cutting techniques such as a technique using a punching edge may be employed, burrs 131 can be produced at an edge of the hybrid card as shown in FIG. 29 or the card can produce a trapezoidal cross section as shown in FIG. 30. Then, it will be difficult to reliably connect the electromagnetic wave barrier layer 129 to the grounded potential of the hybrid card receiving table of the corresponding information recording/reproducing apparatus by way of the exposed edge thereof. To the contrary, the electromagnetic wave barrier layer 129 of the current embodiment of hybrid card, a part of which (shaded area) is made of an electroconductive material, can be reliably connected to the card receiving table of the information recording/reproducing apparatus by way of an electroconductive terminal 130 and to the grounded potential 207 of the apparatus. The electroconductive terminal 130 preferably shows an electroconductivity of lS/cm or more. Additionally, a variety of electroconductive materials can be used for the electroconductive terminal 130 when the latter is arranged at an edge of the hybrid card because it is subjected to less rigorous conditions in terms of thickness and transparency. Materials that can provide a good contact with the corresponding edge of the card for the terminal will preferably be used. The electroconductive terminal 130 can be prepared by forming a metal film or an alloy film by means of evaporation, sputtering or non-electrolytic plating. Alternatively, it may be prepared by applying a silver paste coating composition (e.g., FA-320: tradename, available from OSAKA ASAHI CHEMICAL Co., Ltd.) or an electroconductive coating composition obtained by dispersing electroconductive powder in photosetting resin (e.g., containing urethane acrylate type UV-setting resin (UNIDIC: tradename, available from DAINIPPON INK & CHEMICALS Inc.) by 90 weight portions and antimony-doped tin oxide powder (T-1: tradename, available from Mitsubishi Metal Corporation) as electroconductive powder) by 10 weight portions and photosetting the paint. From the viewpoint of productivity, the use of electroconductive ink is preferable.

The electroconductive terminal is made as thin as possible in view of the fact that it is formed by arranging the electroconductive material along the outer periphery of the card cut to the proper size. Preferably, the electroconductive terminal has a thickness of about 3 to 50µm. Alternatively, it may be formed by cutting the card partly to produce a notch and filling the notch with the electroconductive material. Still alternatively, it may be formed by preparing a card having a size slightly smaller than the proper size and surrounding the card with the electroconductive material along the edges to make the card show the proper size. After all, the current embodiment would not be adversely affected by vibration that may be produced when the card holder is shaken during the operation of optically recording/reproducing information so that the electromagnetic wave barrier layer can remain grounded in the information recording/reproducing apparatus. As a result, the electromagnetic wave generated by the information recording/reproducing apparatus of non-contact IC type can be effectively shut off by the electromagnetic wave barrier layer of the card to prevent the actuator for the optical recording/reproducing beam from suffering any undesirable effects.

With any of the above described embodiments of information recording medium according to the invention, the IC chip can be accessed without contacting it so that no electric contact has to be provided on the surface of the medium. As a result, a very flat IC module can be realized with a height substantially equal to that of an ordinary credit card for a lightweight and portable information recording medium comprising two memory sections of an IC recording section and an optical recording region. Additionally, since the surface of the transparent substrate for optical recording is free from scars if the hybrid card is inserted upside down into a hybrid information recording/reproducing apparatus so that the optical recording region of the card can reliably and accurately operate for recording/reproducing information to enjoy a long service life. Thus, the present invention can be used to configure an effective and reliable information recording/reproducing system adapted for high speed recording and reproduction by combining a hybrid type information recording medium and an information recording/reproducing apparatus according to the invention in order to provide a wide variety of applications.

With an hybrid information recording medium according to the invention and comprising an non-contact IC chip and an optical recording region, if a strong electromagnetic wave is applied from an external coil to actuate the IC module for an information recording/reproducing operation, the adverse effect of the electromagnetic wave on the operation of driving the actuator for optically recording information can be minimized. Thus, the actuator of the optical head can be driven smoothly and made free from malfunctioning. As a result, an information recording/reproducing system that can fully exploit the potential of a hybrid card information recording medium can be configured. Such a system can use the information stored in the IC memory section and the information stored in the optical recording region of the medium simultaneously in a coordinated manner to fully exploit the potential of a hybrid card information recording medium.

If the optical recording layer of an information recording medium according to the invention is made of an organic coloring matter that transmits light, the components of the IC module such as the IC chip, the capacitor and the wiring section do not generate significant noise during the optical recording/reproducing operation to realize optical recording on a stable basis and the printed information contained in the optical recording region can be visually recognized through the recording layer. Then, the information recording medium can be provided with a large volume of visible information.

With a number of embodiments of hybrid type information recording medium according to the invention and comprising a non-contact IC chip and an optical recording layer, the magnetic field generated by the external coil of the recording/reproducing apparatus being used with the IC chip during the operation of recording/reproducing information does not adversely affect the actuator of the optical recording head. Additionally, the information recording medium can store a large volume of optical data because the internal coil may be arranged to overlap the optical recording region of the card. Still additionally, the adverse effect on the actuator of the optical recording head of the magnetic field generated by the external coil of the recording/reproducing apparatus being used with the card can be minimized.

Finally, according to the invention, there is provided an information recording/reproducing apparatus that can be used with a number of embodiments of information recording medium according to the invention. Such an apparatus can effectively minimize the adverse effect on the actuator of the optical recording head of the magnetic field generated by the external coil of the recording/reproducing apparatus and fully exploit the potential of a hybrid card information recording medium according to the invention and comprising both a non-contact IC chip and an optical recording layer.

It will be appreciated that by a "recording/reproducing apparatus" is meant an apparatus for performing at least one of the functions of recording information on and reproducing information from a recording medium.

## Claims

1. An information recording medium comprising a transparent substrate, an optical recording layer, an IC chip and an antenna coil for an information exchanging operation of at least either recording information on the IC chip or reproducing information stored in the IC chip without bringing the IC chip and the information recording/reproducing apparatus into direct mutual contact, wherein the transparent substrate, the optical recording layer and the antenna coil are arranged in the above listed order.

2. An information recording medium comprising a transparent substrate, an optical recording layer and an IC module, the IC module being provided with an IC chip and an antenna coil for an information exchanging operation of at least either recording information on the IC chip or reproducing information stored in the IC chip without bringing the IC chip and the information recording/reproducing apparatus into direct mutual contact, wherein the optical recording layer and the antenna coil are arranged on different respective planes and the antenna coil is arranged in a region not overlapping the region occupied by the optical recording layer.

3. An information recording medium according to claim 2, wherein the optical recording layer is optically transmissive.

4. An information recording medium comprising a non-contact type IC module and an optical recording layer as information storage means, the IC module being provided with an IC chip and an internal antenna coil for an information exchanging operation of at least either recording information on the IC chip or reproducing information stored in the IC chip without bringing the IC chip and the information recording/reproducing apparatus into direct mutual contact, wherein the optical recording layer and the internal antenna coil are arranged on different respective planes in such a way that, when the information recording medium is set in position in an information recording/reproducing apparatus having an external antenna coil as means for recording information on and reproducing information from the IC module and an optical head arranged respectively on the opposite sides of the information recording medium, the external antenna coil and the optical head are not located oppositely with the information recording medium interposed therebetween.

5. An information recording medium comprising a transparent substrate, an optical recording layer, and an IC module having an IC chip and an antenna coil for an information exchanging operation of at least either recording information on the IC chip or reproducing information stored in the IC chip without bringing the IC chip and the information recording/reproducing apparatus into direct mutual contact, wherein the transparent substrate, the optical recording layer and the IC module are arranged in the above listed order, and an electromagnetic wave barrier layer is arranged on the side of the transparent substrate away from the antenna coil.

6. An information recording medium comprising a transparent substrate, an optical recording layer, an IC module having an IC chip and an antenna coil for an information exchanging operation of at least either recording information on the IC chip or reproducing information stored in the IC chip without bringing the IC chip and the information recording/reproducing apparatus into direct mutual contact, wherein the transparent substrate, the optical recording layer and the IC module are arranged in the above listed order, an electromagnetic wave barrier layer is arranged on the side of the transparent substrate away from the antenna coil, and an electroconductive terminal is arranged at a position to be brought into contact with an information recording/reproducing apparatus for recording/reproducing information and electrically connected to the electromagnetic wave barrier layer.

7. An information recording medium according to claim 6, wherein the electroconductive terminal is arranged at an edge of the information recording medium.

8. An information recording medium according to claim 6 or 7, wherein the electroconductive terminal comprises hardened photosetting resin containing an electroconductive material.

9. An information recording medium according to any of claims 5 through 8, wherein the electromagnetic wave barrier layer is arranged between the transparent substrate and the optical recording layer and transparent.

10. An information recording medium according to any of claims 5 through 8, wherein the electromagnetic wave barrier layer is arranged between the optical recording layer and the IC module.

11. An information recording medium according to any of claims 5 through 8, wherein the electromagnetic wave barrier layer is arranged on the outer surface of the transparent substrate.

12. An information recording medium according to claim 10, wherein the electromagnetic wave barrier layer is arranged on the side of the optical recording layer opposite to the side facing the substrate.

13. An information recording medium according to any of claims 5 through 12, wherein the electromagnetic wave barrier layer is exposed to the outside.

14. An information recording medium according to claim 13, wherein the electromagnetic wave barrier layer is exposed at an edge of the information recording medium.

15. An information recording medium according to claim 14, wherein it has a rounded cross section at an edge thereof and the electromagnetic wave barrier layer is exposed at the most extended portions of the cross section.

16. An information recording medium according to claim 15, wherein the electromagnetic wave barrier layer contains an electroconductive material.

17. An information recording medium according to claim 16, wherein the electromagnetic wave barrier layer has an electroconductivity of 1×10⁻⁵S/cm or more.

18. An information recording medium according to any of claims 5 through 15, wherein the electromagnetic wave barrier layer contains a ferromagnetic material.

19. An information recording medium according to claim 18, wherein the electromagnetic wave barrier layer has a saturation magnetism factor of 1 gauss or more.

20. An information recording/reproducing apparatus to be used with an information recording medium comprising a transparent substrate, an optical recording layer, an IC chip and a first antenna coil for an information exchanging operation of at least either recording information on the IC chip or reproducing information stored in the IC chip without bringing the IC chip and the information recording/reproducing apparatus into direct mutual contact, the transparent substrate, the optical recording layer and the first antenna coil being arranged in the above listed order, wherein the apparatus comprises an optical head for recording information on and reproducing information from the optical recording layer, an information recording medium receiving table for receiving the information recording medium and a second antenna coil for at least either recording information on the IC chip or reproducing information stored in the IC chip without bringing the IC chip and the information recording/reproducing apparatus into direct mutual contact, and wherein the second antenna coil is arranged on the information recording medium receiving table.

21. An information recording/reproducing apparatus according to claim 20, wherein the optical head is arranged to allow a beam of light to enter the optical recording region in order to record information on or reproduce information from the optical recording region by way of the transparent substrate when the information recording medium is arranged on the information recording medium receiving table in such a way that the first and second antenna coils are located oppositely relative to each other.

22. An information recording/reproducing apparatus according to claim 21, wherein the first and second antenna coils are practically held in tight contact with each other when the information recording medium is arranged on the information recording medium receiving table.

23. An information recording/reproducing apparatus to be used with an information recording medium comprising a transparent substrate, an optical recording layer, an IC module having an IC chip and an antenna coil for an information exchanging operation of at least either recording information on the IC chip or reproducing information stored in the IC chip without bringing the IC chip and the information recording/reproducing apparatus into direct mutual contact, the transparent substrate, the optical recording layer and the IC module being arranged in the above listed order, and an electromagnetic wave barrier layer arranged on the side of the transparent substrate away from the antenna coil, wherein the apparatus comprises an optical head for recording information on and reproducing information from the optical recording layer, an information recording medium receiving table for receiving the information recording medium and a coil for at least either recording information on the IC chip or reproducing information stored in the IC chip, the coil and the optical head being arranged in such a way that, when the information recording medium is set in position on the information recording medium receiving table, they are located oppositely with the information recording medium interposed therebetween, and wherein the information recording medium receiving table is so configured that, when the information recording medium is set in position on the information recording medium receiving table, it is electrically connected to the electromagnetic wave barrier layer for grounding.

24. An information recording/reproducing apparatus to be used with an information recording medium comprising a transparent substrate, an optical recording layer, an IC module having an IC chip and an antenna coil for an information exchanging operation of at least either recording information on the IC chip or reproducing information stored in the IC chip without bringing the IC chip and the information recording/reproducing apparatus into direct mutual contact, the transparent substrate, the optical recording layer and the IC module being arranged in the above listed order, an electromagnetic wave barrier layer arranged on the side of the transparent substrate away from the antenna coil and an electroconductive terminal arranged at a position to be brought into contact with an information recording/reproducing apparatus for recording/reproducing information and electrically connected to the electromagnetic wave barrier layer, wherein the apparatus comprises an optical head for recording information on and reproducing information from the optical recording layer, an information recording medium receiving table for receiving the information recording medium and a coil for at least either recording information on the IC chip or reproducing information stored in the IC chip, wherein the coil and the optical head are arranged in such a way that, when the information recording medium is set in position on the information recording medium receiving table, they are located oppositely with the information recording medium interposed therebetween, and wherein the information recording medium receiving table is so configured that, when the information recording medium is set in position on the information recording medium receiving table, it is electrically connected to the electroconductive terminal to ground the electromagnetic wave barrier layer.

25. An information recording medium comprising an IC chip and an antenna coil for enabling non-contact reading or writing of information into or from the IC chip.

26. A medium according to claim 25 including an optically readable recording area.

27. A method according to claim 25 or 26 including an electromagnetic wave barrier layer.

28. An apparatus for performing at least one of the functions of reading and writing information into a medium according to claims 25 to 27 including a further antenna coil for coupling with the antenna carried by the medium.
